# EUROPEAN PATENT APPLICATION

(11) **EP 2 897 392 A1**
(43) Date of publication of application: **22.07.2015**
(21) Application number: 13837842.7
(22) Date of filing: 12.09.2013
(51) Int. Cl.: H04W 4/20, H04W 92/24

(54) **MOBILE COMMUNICATION SYSTEM, DATA COMMUNICATION METHOD, GATEWAY DEVICE, AND BASE STATION**

(30) Priority: 12.09.2012 JP 2012200731
(71) Applicant: NEC Corporation, Tokyo 108-8001 (JP)
(72) Inventor: ZEMBUTSU, Hajime, Tokyo 108-8001 (JP); TAMURA, Toshiyuki, Tokyo 108-8001 (JP)
(74) Representative: MacDougall, Alan John Shaw
(86) International application number: PCT/JP2013/005397
(87) International publication number: WO 2014/041805

(57) **Abstract**

To provide a mobile communication system and a data communication method capable of reducing resource load in a mobile phone system, the mobile phone system includes SGW (40) that transmits user data with eNodeB (20) and PGW (50) that transmits the user data with an external network, and the SGW (40) and the PGW (50) transmit a small amount of data autonomously transmitted from a terminal device through the eNodeB (20) by using a communication resource for transmitting a control signal, not a communication resource for transmitting user data, between the SGW (40) and the PGW (50).

## Description

### Technical Field

The present invention relates to a mobile communication system, a data communication method, a gateway device and a base station and, particularly, to a mobile communication system that accommodates an MTC device and a data communication method in the mobile communication system.

### Background Art

In the current mobile phone system network that is specified in the 3GPP (3rd Generation Partnership Project) standardization group or the like, a protocol called GTP (GPRS Tunnelling Protocol) or PMIP (Proxy Mobile IP) is applied. Such a protocol reserves resources necessary to implement communication requested by users and thereby provide transmission channels to the users. The necessary resources need to be prepared in accordance with the number of users and the number of connections requested by each user. Such a protocol is composed of a control signal (Control Plane or C-Plane) for communication control and a user data signal (User Plane or U-Plane) for transmission of user data. Further, a plurality of transmission channels (GTP tunnel for GTP, and IP tunnel for PMIP) to be used for user data signal transmission can be reserved in response to users' requests.

On the other hand, as the latest technological trends, communication intended not only for general mobile phones but also for devices that do not require human operations (which is referred to hereinafter as "non-human") such as data terminals, sensors, automatic vending machines and automobiles using a general mobile phone system is under review. The communication intended for non-human devices is generally called MTC (Machine Type Communication). One characteristic of the MTC is to perform data communication in a relatively small size. For example, in the case where a temperature sensor reports the temperature at regular intervals, the amount of data required for one-time communication is only several bytes. Further, another characteristic of a device used for the MTC (which is referred to hereinafter as "MTC device") is to implement communication during late night hours where the mobile phone system is not in heavy use, avoiding busy hours where it is in heavy use. By utilizing such characteristics, mobile operators envision the mobile phone system to accommodate several hundred times more MTC devices than those in a general mobile terminal.

When an MTC device is connected to a mobile phone system (ATTACH process is done), a node device in the mobile phone system reserves a user data transmission channel for MTC. The reservation of the user data transmission channel intends to reserve necessary resources for the user data transmission channel for the MTC device by the node device in the mobile phone system.

Non Patent Literature 1 discloses a procedure to reserve necessary resources for a user data transmission channel in the network specified in the 3GPP.

### Citation List

### Non Patent Literature

NPL 1: 3GPP TS 23.401 V11.1.0 "GPRS enhancements for E-UTRAN access (Release 11)", clauses 5.3.2 and 5.10.2, 2012-03

### Summary of Invention

### Technical Problem

However, as described above, mobile operators envision the mobile phone system to accommodate several hundred times more MTC devices than those in a general mobile terminal. Therefore, if necessary resources are reserved for the MTC device in the same manner as for a general mobile terminal in the node device in the mobile phone system, resource load (memory load) in the mobile phone system becomes a major issue.

To solve the above problem, an exemplary object of the present invention is to provide a mobile communication system, a data communication method, a gateway device and a base station that can reduce resource load in a mobile phone system.

### Solution to Problem

A mobile communication system according to a first aspect of the invention includes a first gateway device that transmits user data with a base station, and a second gateway device that transmits the user data with the first gateway device and an external network, wherein the first gateway device and the second gateway device transmit a small amount of data autonomously transmitted from a terminal device through the base station by using a communication resource for transmitting a control signal, not a communication resource for transmitting user data, between the first gateway device and the second gateway device.

A data communication method according to a second aspect of the invention is a data communication method between a first gateway device that transmits user data with a base station and a second gateway device that transmits the user data with an external network, the method including transmitting a small amount of data autonomously transmitted from a terminal device through the base station by using a communication resource for transmitting a control signal, not a communication resource for transmitting user data, between the first gateway device and the second gateway device.

### Advantageous Effects of Invention

According to the exemplary aspects of the present invention, it is possible to provide a mobile communication system, a data communication method, a gateway device and a base station that can reduce resource load in a mobile phone system.

### Brief Description of Drawings

Fig. 1 is a block diagram of a mobile communication system according to a first exemplary embodiment.
Fig. 2 is a block diagram of a mobile communication system according to the first exemplary embodiment.
Fig. 3 is a block diagram of a mobile communication system according to the first exemplary embodiment.
Fig. 4 is a block diagram of a GTP-C message according to the first exemplary embodiment.
Fig. 5 is a diagram illustrating a flow of an ATTACH process according to the first exemplary embodiment.
Fig. 6 is a diagram illustrating a flow of a process when performing TAU according to the first exemplary embodiment.
Fig. 7 is a diagram illustrating a flow of a process when transmitting a small amount of data from UE according to the first exemplary embodiment.
Fig. 8 is a diagram illustrating a flow of a handover process according to the first exemplary embodiment.
Fig. 9 is a diagram illustrating a flow of a handover process according to the first exemplary embodiment.
Fig. 10 is a diagram illustrating a flow of a process when receiving a small amount of data by PGW according to the first exemplary embodiment.
Fig. 11 is a diagram illustrating a flow of a process when transmitting a small amount of data from UE according to the first exemplary embodiment.
Fig. 12 is a diagram illustrating a flow of a process when transmitting a large amount of data according to the first exemplary embodiment.
Fig. 13 is a diagram illustrating a flow of a process when transmitting a large amount of data according to the first exemplary embodiment.
Fig. 14 is a diagram illustrating a flow of a process when deleting a dedicated bearer according to the first exemplary embodiment.
Fig. 15 is a diagram illustrating a flow of a process when deleting a dedicated bearer according to the first exemplary embodiment.
Fig. 16 is a diagram illustrating a flow of an ATTACH process according to a second exemplary embodiment.
Fig. 17 is a diagram illustrating a flow of an ATTACH process according to the second exemplary embodiment.
Fig. 18 is a diagram illustrating a flow of a process when performing TAU according to the second exemplary embodiment.
Fig. 19 is a diagram illustrating a flow of a handover process according to the second exemplary embodiment.
Fig. 20 is a block diagram of a mobile communication system according to a third exemplary embodiment.
Fig. 21 is a block diagram of a mobile communication system according to the third exemplary embodiment.
Fig. 22 is a block diagram of a mobile communication system according to the third exemplary embodiment.
Fig. 23 is a block diagram of a RANAP message according to the third exemplary embodiment.
Fig. 24 is a diagram illustrating a flow of an ATTACH process according to the third exemplary embodiment.
Fig. 25 is a diagram illustrating a flow of a process when transmitting a small amount of data from UE according to the third exemplary embodiment.
Fig. 26 is a diagram illustrating a flow of a process when performing RAU according to the third exemplary embodiment.
Fig. 27 is a diagram illustrating a flow of a process when RNC and SGSN are changed according to the third exemplary embodiment.
Fig. 28 is a diagram illustrating a flow of a process when RNC and SGSN are changed according to the third exemplary embodiment.
Fig. 29 is a diagram illustrating a flow of a process when receiving a small amount of data by GGSN according to the third exemplary embodiment.
Fig. 30 is a diagram illustrating a flow of a process when transmitting a small amount of data from UE according to the third exemplary embodiment.
Fig. 31 is a diagram illustrating a flow of a process when transmitting and receiving a large amount of data according to the third exemplary embodiment.
Fig. 32 is a diagram illustrating a flow of a process when transmitting and receiving a large amount of data according to the third exemplary embodiment.
Fig. 33 is a diagram illustrating a flow of a process when deleting a dedicated bearer according to the third exemplary embodiment.
Fig. 34 is a diagram illustrating a flow of a process when deleting a dedicated bearer according to the third exemplary embodiment.
Fig. 35 is a diagram illustrating a flow of an ATTACH process according to a fourth exemplary embodiment.
Fig. 36 is a diagram illustrating a flow of a process when performing RAU according to the fourth exemplary embodiment.
Fig. 37 is a diagram illustrating a flow of a process when transmitting a small amount of data from UE according to the fourth exemplary embodiment.
Fig. 38 is a diagram illustrating a flow of a handover process according to the fourth exemplary embodiment.
Fig. 39 is a diagram illustrating a flow of a handover process according to the fourth exemplary embodiment.
Fig. 40 is a diagram illustrating a flow of a process when receiving a small amount of data by GGSN according to the fourth exemplary embodiment.
Fig. 41 is a diagram illustrating a flow of a process when transmitting a small amount of data from UE according to the fourth exemplary embodiment.
Fig. 42 is a diagram illustrating a flow of a process when transmitting and receiving a large amount of data according to the fourth exemplary embodiment.
Fig. 43 is a diagram illustrating a flow of a process when transmitting and receiving a large amount of data according to the fourth exemplary embodiment.
Fig. 44 is a diagram illustrating a flow of a process when deleting a dedicated bearer according to the fourth exemplary embodiment.
Fig. 45 is a diagram illustrating a flow of a process when deleting a dedicated bearer according to the fourth exemplary embodiment.

### Description of Exemplary embodiments

### (First exemplary embodiment)

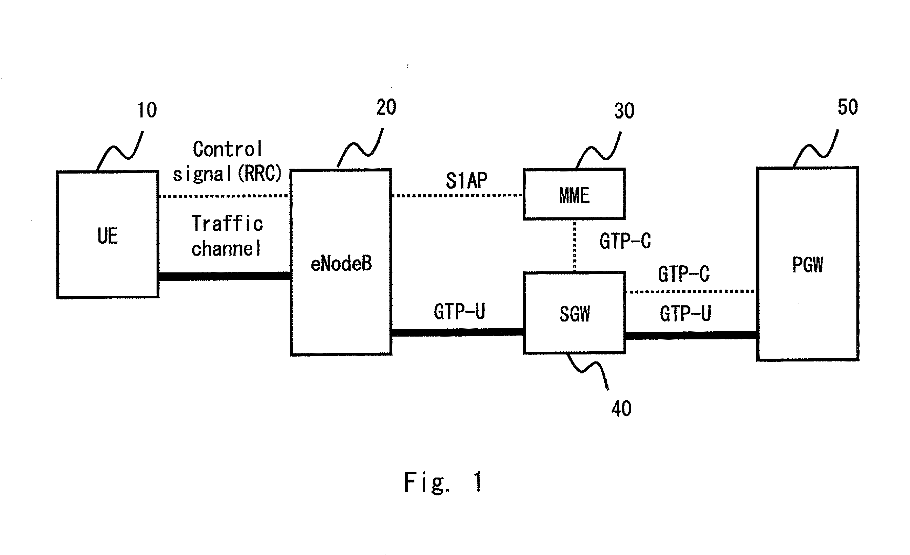

Exemplary embodiments of the present invention are described hereinafter with reference to the drawings. Firstly, a configuration example of a mobile communication system according to a first exemplary embodiment of the invention is described hereinafter with reference to Fig 1. The configuration of the mobile communication system shown in Fig. 1 is an example of using LTE (Long Term Evolution) specified in the 3GPP for an access network. The mobile communication system shown in Fig. 1 includes UE (User Equipment) 10, eNodeB (enhanced Node B) 20, MME (Mobility Management Entity) 30, SGW (Serving Gateway) 40 and PGW (Packet Data Network Gateway) 50.

The UE 10 is communication equipment or a mobile station that performs wireless communication, and it may be a mobile phone or a smartphone terminal, for example. Further, the UE 10 may be an MTC device (machine-type-communication device). The eNodeB 20 is a base station that performs wireless communication with a base station. The UE 10 and the eNodeB 20 perform wireless communication using LTE, which is the wireless communication standard specified in the 3GPP.

The SGW 40 is used as a data relay device that transmits and receives user data between the eNodeB 20 and the PGW 50. The user data is packet data including voice data or the like that is transmitted from the UE 10.

The PGW 50 is used as a gateway device that transmits and receives user data with an external network. The external network is a network different from the network that includes the eNodeB20, the MME30, the SGW40 and the PGW50. The external network is a network that is managed by a mobile operator different from the mobile operator that manages the eNodeB20, the MME30, the SGW40 and the PGW50, for example. However, the external network is not limited thereto, and when the mobile operator is the same, it may be the same network as the network that includes the eNodeB20, the MME30, the SGW40 and the PGW50.

The MME 30 is a device that performs a call control process. For example, the MME 30 designates SGW which is the destination of user data transmitted from the eNodeB 20 and notifies the designated SGW to the eNodeB 20. The MME 30 transmits and receives a control signal to and from the eNodeB 20 and also transmits and receives a control signal to and from the SGW 40.

Protocols that are specified between the respective node devices are described hereinbelow. The control signal between the UE 10 and the eNodeB 20 is transmitted and received using the protocol specified as RRC (Radio Resource Control). The user data in the UE 10 and the eNodeB 20 is transmitted and received using Traffic channel.

The user data between the eNodeB 20 and the SGW 40 and the user data between the SGW 40 and the PGW 50 are transmitted and received using the protocol specified as GTP-U.

The control signal between the eNodeB 20 and the MME 30 is transmitted and received using the protocol specified as SLAP (S1 Application Protocol). The control signal between the MME 30 and the SGW 40 and the control signal between the SGW 40 and the PGW 50 are transmitted and received using the protocol specified as GTP-C.

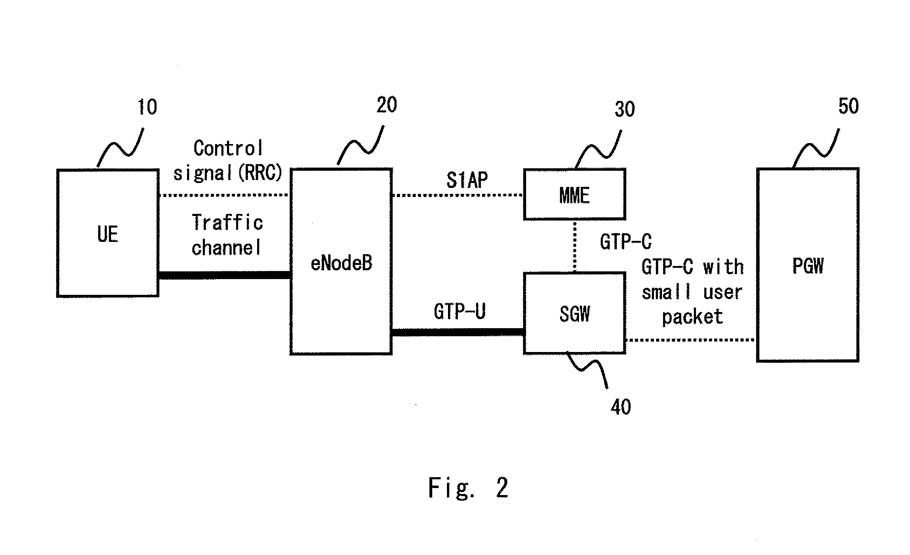

A configuration of transmitting and receiving a small amount of data between the SGW 40 and the PGW 50 by using communication resources for transmitting and receiving a control signal is described hereinafter with reference to Fig. 2. The small amount of data is data that is transmitted from the MTC device, for example. Specific examples include measurement values of a sensor and a meter, sales of an automatic vending machine and the like. Further, the small amount of data may be user data that is autonomously transmitted and received between communication equipment without user operation. The small amount of data is specified as Small Data in the 3GPP (3GPP TS 22.368 V11.5.0 "Service requirements for Machine-Type Communications (MTC)", clause 7.2.5, 2012-06 etc.). The communication equipment is an automatic vending machine, a sensor terminal or the like, for example. The communication between the communication equipments is specified as MTC (Machine Type Communication) in the 3GPP. In other words, the small amount of data is data that is transmitted between MTC devices or between an MTC device and a server device or the like. In general, the MTC indicates communication that is autonomously performed without user operation. The communication resources are parameters that are set for transmitting and receiving user data or a control signal, resources necessary for transmitting and receiving user data or a control signal on a memory that stores parameters or a communication channel or the like, for example.

Fig. 2 shows transmitting and receiving a small amount of data between the SGW 40 and the PGW 50 by using the protocol specified as GTP-C. For example, the SGW 40 transmits a small amount of data from the UE 10 that is transmitted from the eNodeB 20 through GTP-U to the PGW 50 through GTP-C. On the other hand, when the PGW 50 receives a small amount of data addressed to the UE 10, the PGW 50 transmits the small amount of data to the SGW 40 through GTP-C. In this manner, by transmitting and receiving a small amount of data between the SGW 40 and the PGW 50 by using GTP-C, it is not necessary to reserve communication resources for user data (for example, GTP-U) in the SGW 40 and the PGW 50 and thereby reduce resource load.

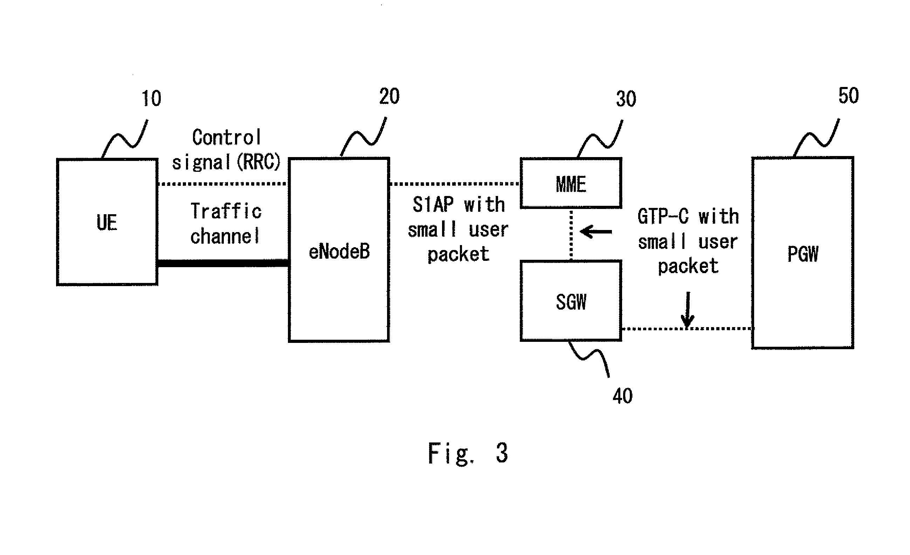

Fig. 3 shows an example of transmitting a small amount of data, which has been transmitted using GTP-U, between the eNodeB 20 and the SGW 40 by using the protocol for transmitting and receiving a control signal. The eNodeB 20 transmits a small amount of data that is transmitted through Traffic channel to the MME 30 through S1 AP. Further, the MME 30 transmits a small amount of data that is transmitted from the eNodeB 20 to the SGW 40 through GTP-C. On the other hand, when the SGW 40 receives a small amount of data addressed to the UE 10 from the PGW 50, the SGW 40 transmits the small amount of data to the MME 30 through GTP-C. Further, the MME 30 transmits the received small amount of data to the eNodeB 20 through S1 AP. Transmitting and receiving between the SGW 40 and the PGW 50 are the same as shown in Fig. 2 and not redundantly described in detail.

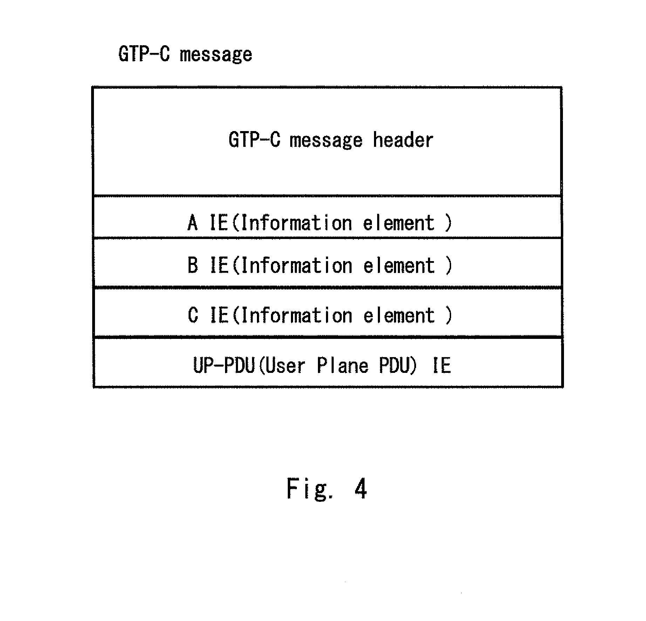

A configuration example of a GTP-C message is described hereinafter with reference to Fig. 4. A GTP-C message that is transmitted through GTP-C includes a GTP-C message header and IE (Information Element) A to C. Further, in the GTP-C message, UP-PDU (User Plane-Protocol Date Unit) IE is specified in order to transmit a small amount of data. Further, in a S1 AP message that is used between the eNodeB 20 to the MME 30 also, UP-PDU IE is specified just like in the GTP-C message.

In this manner, by transmitting and receiving a small amount of data between the eNodeB 20 to the SGW 40, in addition to between the SGW 40 and the PGW 50, using S1 AP and GTP-C that are used for transmitting a control signal, it is not necessary to reserve communication resources for user data in the eNodeB 20 and thereby reduce resource load.

Further, in the configuration of Fig. 2, the processing operation of the UE 10 and the eNodeB 20 is the same as that of the UE 10 and the eNodeB 20 shown in Fig. 1. Therefore, it is not necessary to incorporate a novel feature into the UE 10 and the eNodeB 20 in order to implement the present invention. On the other hand, in the configuration of Fig. 3, the processing operation of the UE 10 is the same as that of the UE 10 shown in Fig. 1. Therefore, it is not necessary to incorporate a novel feature into the UE 10 in order to implement the present invention. The novel feature is a feature that receives a small amount of data transmitted through a user data bearer and transmitting the received small amount of data through a control signal bearer, for example.

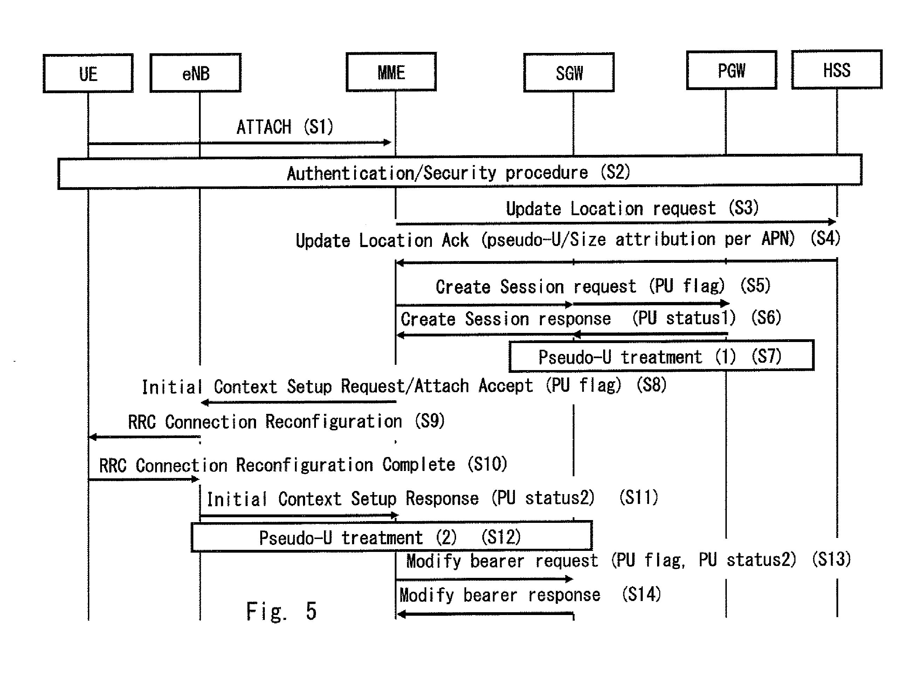

A flow of a process (ATTACH) for UE location registration is described hereinafter with reference to Fig. 5. ATTACH is performed when power is supplied to the UE, for example, for registering the location of the UE in the mobile communication network. Further, in Fig. 5, eNodeB is denoted as eNB. In the following description, eNodeB and eNB are the same device.

First, the UE 10 transmits an ATTACH signal to the MME 30 (S1). Next, authentication and security setting are performed between the UE 10 and HSS (Home Subscriber Server) (S2). Then, the MME 30 transmits an Update Location request signal to the HSS (S3). Then, the HSS transmits an Update Location Ack signal to the MME 30. The Update Location Ack signal contains pseudo-U/Size attribution that is set per APN. The pseudo-U/Size attribution may be set per IMSI, IMEISV or the like, other than per APN. The HSS manages pseudo-U/Size attribution as subscriber data that is associated with the UE 10. Thus, the HSS can add pseudo-U/Size attribution to the Update Location Ack signal, which is an acknowledgement signal to the Update Location request signal transmitted from the UE 10.

The pseudo-U/Size attribution is used for setting a pseudo-U bearer. The pseudo-U bearer is a GTP-U bearer that is set in a pseudo or virtual manner. The bearer is a communication channel between devices. The bearer may be communication resources that is reserved for setting a communication channel between devices. Because the pseudo-U bearer is a bearer that is set in a pseudo or virtual manner, communication resources is not reserved or a minimum necessary communication resource is reserved. Specifically, when the UE 10 performs the ATTACH process, reservation of communication resources is performed generally in order to set a GTP-U bearer. Instead of setting the GTP-U bearer, by setting the pseudo-U bearer for which reservation of communication resources is not actually performed, it is possible to avoid useless reservation of communication resources without changing the processing sequence between devices. To be specific, when transmitting a small amount of data through the GTP-C bearer, setting of the pseudo-U bearer is performed instead of setting of the GTP-U bearer, which is generally performed. In this manner, it is possible to accommodate communication equipment that transmits a small amount of data into a mobile communication system without allocating communication resources for setting a GTP-U bearer to the communication equipment.

Further, in the pseudo-U/Size attribution, information about a size that is defined as a small amount of data is specified as well. Data that is larger than the defined size is not treated as a small amount of data. Thus, data that is smaller than the defined size is treated as a small amount of data.

The MME 30 that has received the pseudo-U/Size attribution transmits a Create Session request signal containing PU (pseudo-U) flag to the SGW 40. Further, the SGW 40 transmits the Create Session request signal containing PU (pseudo-U) flag to the PGW 50 (S5). The PU flag is a parameter that notifies setting of a pseudo-U bearer, not a general GTP-U bearer, between the SGW 40 and the PGW 50. Further, the PU flag may be a parameter that notifies setting of a pseudo-U bearer, not a general GTP-U bearer, between the eNodeB 20 and the SGW 40.

Then, the PGW 50 transmits a Create Session response signal containing PU status 1 to the SGW 40. Further, the SGW 40 transmits the Create Session response signal containing PU status 1 to the MME 30 (S6). The PU status 1 is a parameter that indicates the status where the pseudo-U bearer is set between the SGW 40 and the PGW 50. The Create Session response signal is transmitted from the PGW 50 to the SGW 40 and further from the SGW 40 to the MME 30, and then the PU status 1 is stored in the SGW 40, and thereby setting of the pseudo-U bearer (which is referred to hereinafter as Pseudo-U treatment (1)) between the SGW 40 and the PGW 50 is done (S7).

Then, the MME 30 transmits an Initial Context Setup Request/Attach Accept signal containing PU flag to the eNodeB 20 (S8). The MME 30 thereby notifies setting of a pseudo-U bearer, not a GTP-U bearer, between the eNodeB 20 and the SGW 40. Then, the eNodeB 20 transmits a RRC Connection Reconfiguration signal to the UE 10 (S9). The UE 10 then transmits a RRC Connection Reconfiguration Complete signal to the eNodeB 20 (S10).

Then, the eNodeB 20 transmits an Initial Context Setup Response signal containing PU status 2 to the MME 30 (S11). The PU status 2 is a parameter that indicates the status where the pseudo-U bearer is set between the eNodeB 20 and the SGW 40. Setting of the pseudo-U bearer (which is referred to hereinafter as Pseudo-U treatment (2)) between the eNodeB 20 and the SGW 40 is thereby done (S12).

Then, the MME 30 transmits a Modify bearer request signal containing PU flag and PU status 2 to the SGW 40 (S13). The MME 30 thereby notifies the status of Pseudo-U treatment (2) to the SGW 40. The SGW 40 then transmits a Modify bearer response signal to the MME 30 (S14).

The SGW 40 stores PU status 1 and PU status 2. Therefore, the SGW 40 can determine which bearer the received small amount of data is to be set to and transmitted. For example, it is assumed that the SGW 40 stores PU status 2 indicating that the pseudo-U bearer is set between the eNodeB 20 and the SGW 40. In this state, when the SGW 40 receives a small amount of data from the PGW 50, it transmits the small amount of data to the MME 30 through the GTP-C bearer. For example, in the case where the SGW 40 does not store PU status 2, the SGW 40 transmits the small amount of data received from the PGW 50 to the eNodeB 20 through the GTP-U bearer. The case where the SGW 40 does not store PU status 2 occurs when the eNodeB 20 and the SGW 40 do not have the feature to set the pseudo-U bearer between the eNodeB 20 and the SGW 40, for example.

In the above description, the example of setting Pseudo-U treatment (1) and Pseudo-U treatment (2) is described. In other words, the example of transmitting a small amount of data from the eNodeB 20 to the PGW 50 by using the bearer for transmitting a control signal is described. Note that, however, the procedure of setting Pseudo-U treatment (2) may be omitted for the case of transmitting a small amount of data only between the SGW 40 and the PGW 50 by using the bearer for transmitting a control signal. This is the same in the following description as well.

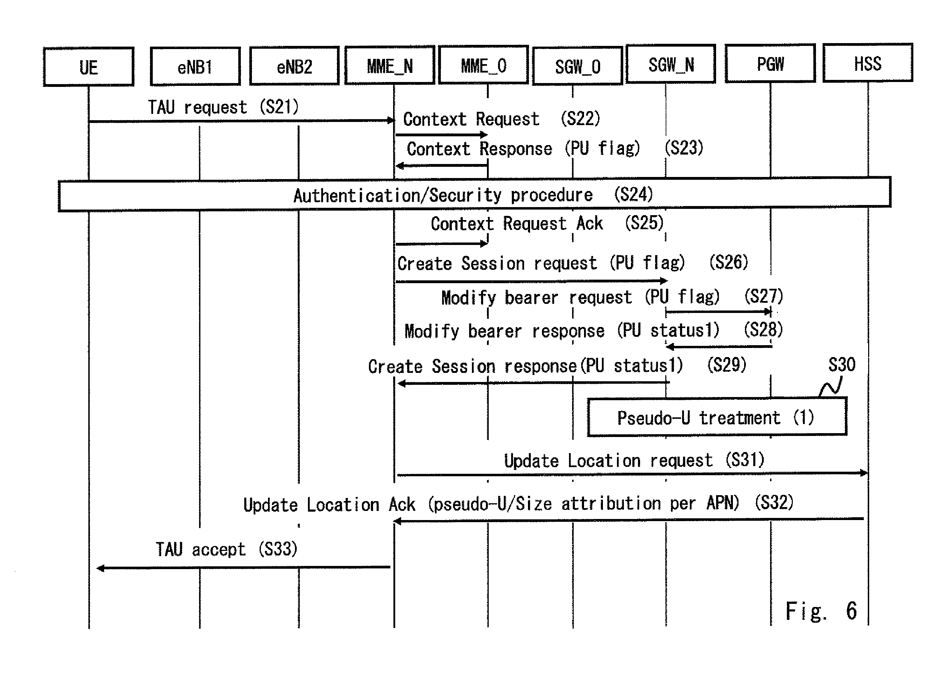

Hereinafter, a flow of a process in the case where TAU (Tracking Area Update) is performed is described with reference to Fig. 6. Tracking Area (TA) is location information of the UE 10 that is managed on the mobile communication network, such as a core network, for example. Tracking Area (TA) may be an area composed of a plurality of cells. TAU is processing that is performed when TA where the UE 10 is located is changed.

First, the UE 10 transmits a TAU request signal to the new MME 30 (New MME) that is going to manage the UE 10 after TA is changed (S21). Next, the New MME transmits a Context Request signal to the MME 30 (Old MME) that has been managing the UE 10 before TA is changed (S22). Then, the Old MME transmits a Context Response signal to the New MME (S23). The Context Response signal contains PU flag. Thus, the Old MME notifies the New MME that the pseudo-U bearer, instead of GTP-U, is to be set for the UE 10. After that, authentication and security setting are performed between the UE 10 and HSS (Home Subscriber Server) (S24). The New MME then transmits a Context Request Ack signal to the Old MME (S25).

Then, the New MME transmits a Create Session request signal containing PU flag to the SGW 40 (New SGW) that is newly allocated to transmit a small amount of data transmitted from the UE 10 after change in TA (S26). Then, the pseudo-U bearer that has been set between the SGW 40 (Old SGW) that has been allocated before change in TA and the PGW 50 is to be set between the New SGW and the PGW 50. To make this setting, the New SGW transmits a Modify bearer request signal containing PU flag to the PGW 50 (S27). Next, the PGW 50 transmits a Modify bearer response signal containing PU status 1 to the New SGW (S28). The New SGW then transmits a Create Session response signal containing PU status 1 to the New MME (S29). Pseudo-U treatment (1) is thereby set between the New SGW and the PGW 50 (S30).

Then, the New MME transmits an Update Location request signal to the HSS (S31). The HSS then transmits an Update Location Ack signal to the New MME. The Update Location Ack signal contains pseudo-U/Size attribution that is set per APN (S32). The pseudo-U/Size attribution may be set per IMSI, IMEISV or the like, other than per APN. Then, the New MME transmits a TAU accept signal to the UE 10 (S33).

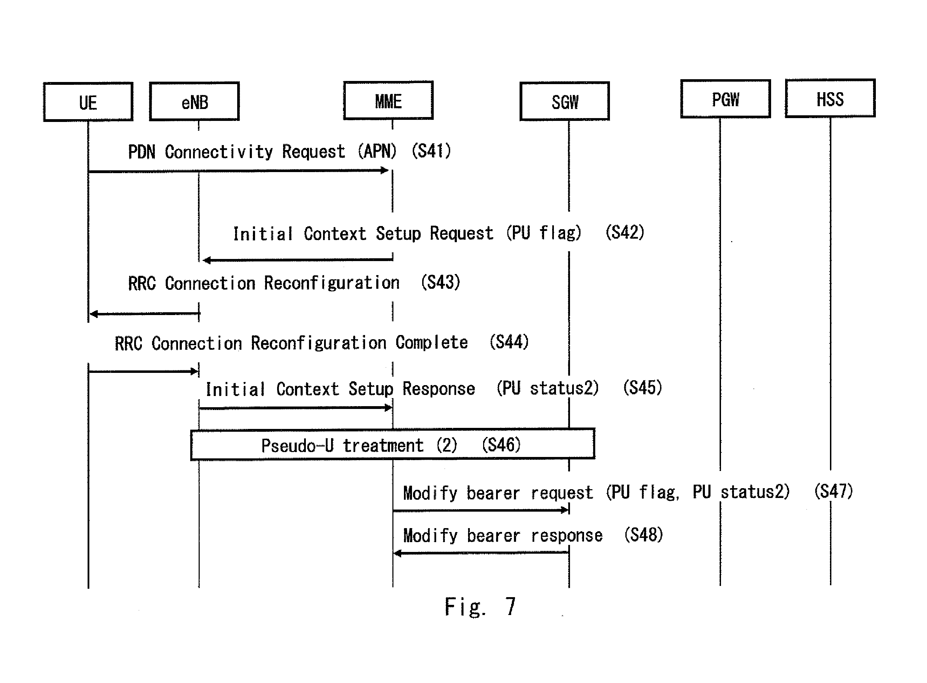

A flow of a process in the case of transmitting a small amount of data from the UE 10 is described hereinafter with reference to Fig. 7. First, the UE 10 transmits a PDN Connectivity Request (APN) signal to the MME 30 (S41). Next, the MME 30 transmits an Initial Context Setup Request signal containing PU flag to the eNodeB 20 (S42). Processing of Steps S43 to S48 is the same as that of Steps S9 to S14 in Fig. 5 and thus not redundantly described in detail.

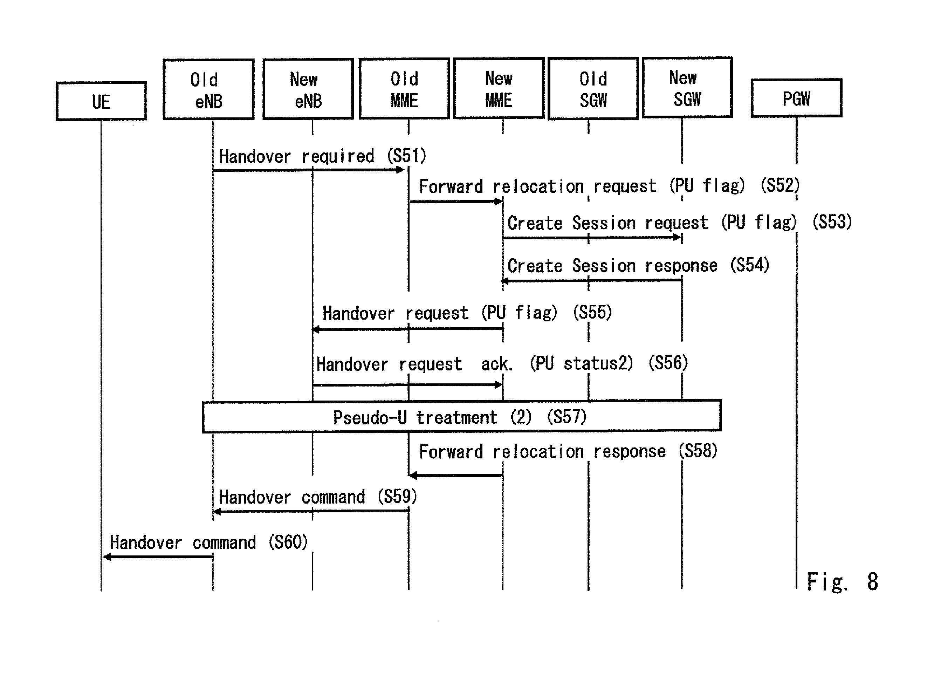

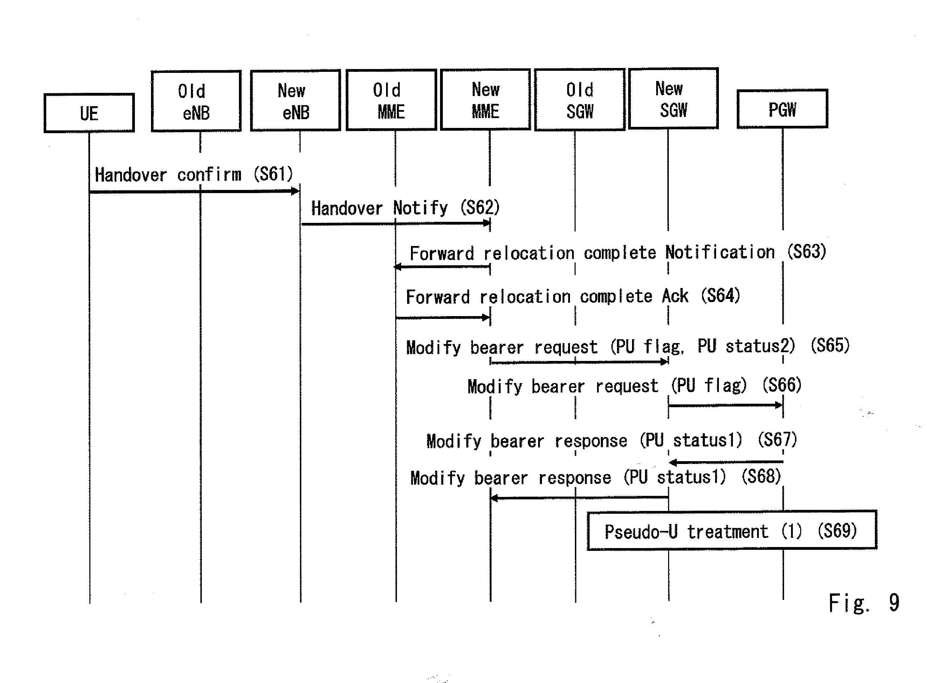

A flow of a handover process is described hereinafter with reference to Figs. 8 and 9. In the handover shown in Figs. 8 and 9, the case where the eNodeB, the MME and the SGW to which the UE 10 belongs are changed is described. First, the eNodeB 20 (Old eNB) from which handover is made transmits a Handover required signal to the MME (Old MME) that manages the Old eNB (S51). Next, the Old MME transmits a Forward relocation request signal to the MME (New MME) that manages the eNodeB 20 (New eNB) to which handover is made (S52). The Forward relocation request signal contains PU flag. Then, the New MME transmits a Create Session request signal to the New SGW to be connected to the New eNB (S53). The Create Session request signal contains PU flag. Then, the New SGW transmits a Create Session response signal to the New MME (S54).

Then, the New MME transmits a Handover request signal containing PU flag to the New eNB (S55). The New eNB then transmits a Handover request ack signal containing PU status 2 to the New MME (S56). Pseudo-U treatment (2) is thereby set between the New eNB and the New SGW (S57). Then, the New MME transmits a Forward relocation response signal to the Old MME (S58). The Old MME then transmits a Handover command signal to the Old eNB (S59). Then, the Old eNB transmits a Handover command signal to the UE 10 (S60).

A handover process after Step S60 is described hereinafter with reference to Fig. 9. After Step S60, the UE 10 transmits a Handover confirm signal to the New eNB (S61). Then, the New eNB transmits a Handover Notify signal to the New MME (S62). The New MME then transmits a Forward relocation complete Notification signal to the Old MME (S63). Then, the Old MME transmits a Forward relocation complete Ack signal to the New MME (S64). Then, the New MME transmits a Modify bearer request signal to the New SGW (S65). The Modify bearer request signal contains PU flag and PU status 2.

Then, the New SGW transmits a Modify bearer request signal containing PU flag to the PGW 50 (S66). Next, the PGW 50 transmits a Modify bearer response signal containing PU status 1 to the New SGW (S67). Further, the New SGW transmits a Modify bearer response signal containing PU status 1 to the New MME (S68). Pseudo-U treatment (1) is thereby set between the New SGW and the PGW 50 (S69).

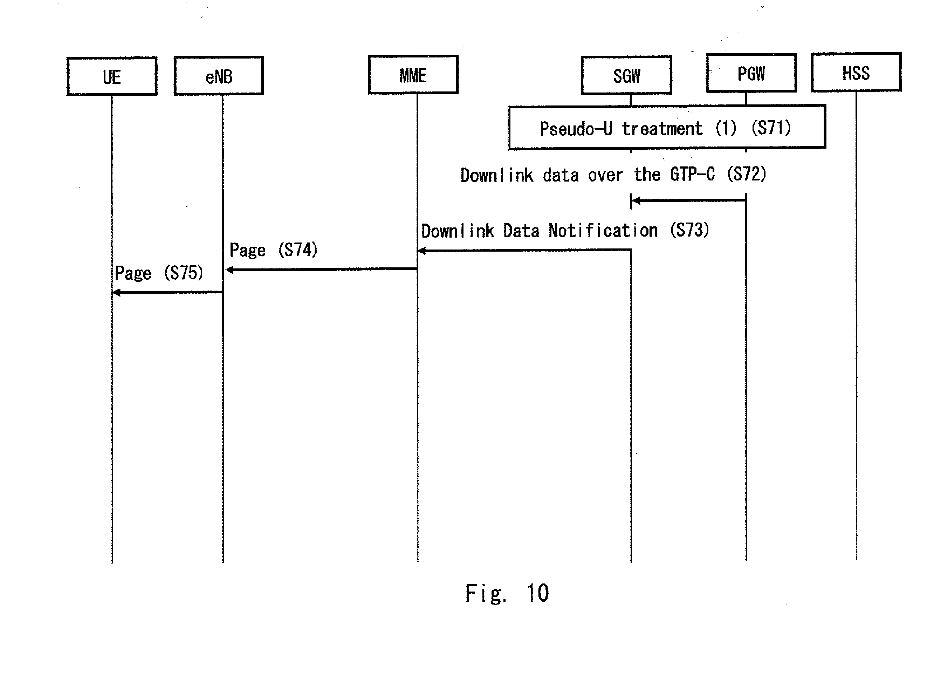

A flow of a process in the case where the PGW 50 receives a small amount of data addressed to the UE 10 is described hereinafter with reference to Fig. 10. It is assumed that Pseudo-U treatment (1) is set between the SGW 40 and the PGW 50 (S71). When the PGW 50 receives a small amount of data addressed to the UE 10 that is associated with Pseudo-U treatment (1), it transmits the received small amount of data to the SGW 40 through GTP-C (S72). Next, the SGW 40 transmits a Downlink Data Notification signal to the MME 30 to notify that the small amount of data is received (S73). The Downlink Data Notification signal may contain a small amount of data. Then, the MME 30 transmits a Page signal to the eNodeB 20 (S74), and further the eNodeB 20 transmits the Page signal to the UE 10 (S75). Note that, in order to determine whether the received data is a small amount of data or not, the PGW 50 may determine whether the size of the data exceeds the size that is defined as a small amount of data.

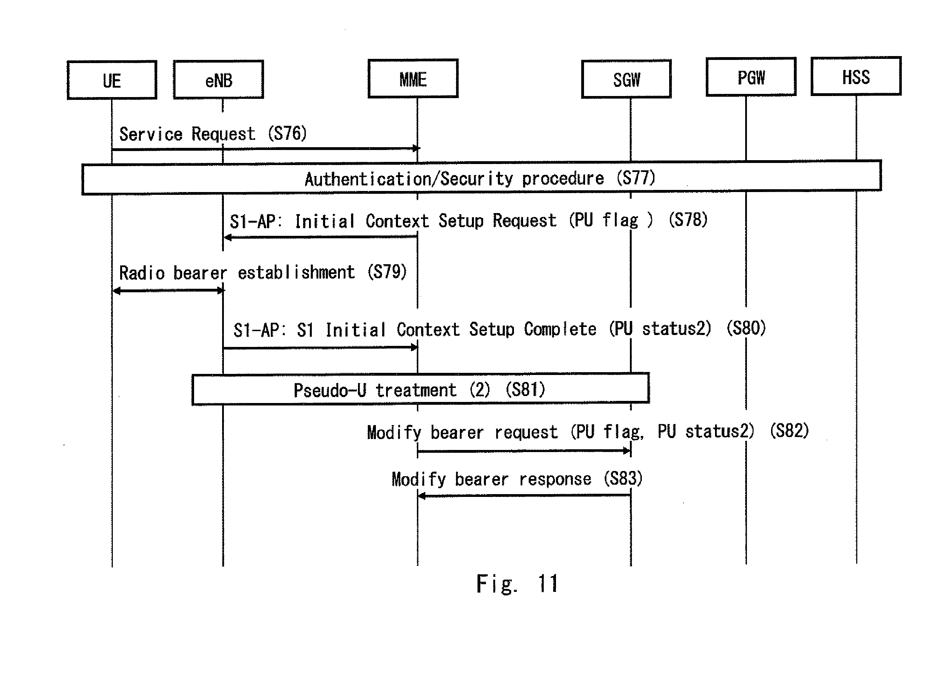

A flow of a process in the case of transmitting a small amount of data from the UE 10 is described hereinafter with reference to Fig. 11. Note that the process shown in Fig. 11 is used also as the process which is executed by the UE 10 that has received the Page signal in Fig. 10.

First, the UE 10 transmits a Service Request signal to the MME 30 (S76). Next, authentication and security setting are performed between the UE 10 and HSS (Home Subscriber Server) (S77). Then, the MME 30 transmits a S1-AP:Initial Context Setup Request signal containing PU flag to the eNodeB 20 (S78). The S1-AP:Initial Context Setup Request signal may contain a small amount of data. Then, the eNodeB 20 sets a radio bearer with the UE 10 (S79). The eNodeB 20 may transmit the small amount of data received with the S1-AP:Initial Context Setup Request signal to the UE 10 by using the set radio bearer. Then, the eNodeB 20 transmits a S1-AP:Initial Context Setup Complete signal containing PU status 2 to the MME 30 (S80). Pseudo-U treatment (2) is thereby set between the eNodeB 20 and the SGW 40 (S81).

Then, the MME 30 transmits a Modify bearer request signal containing PU flag and PU status 2 (S82). The SGW 40 then transmits a Modify bearer response signal to the MME 30 (S83).

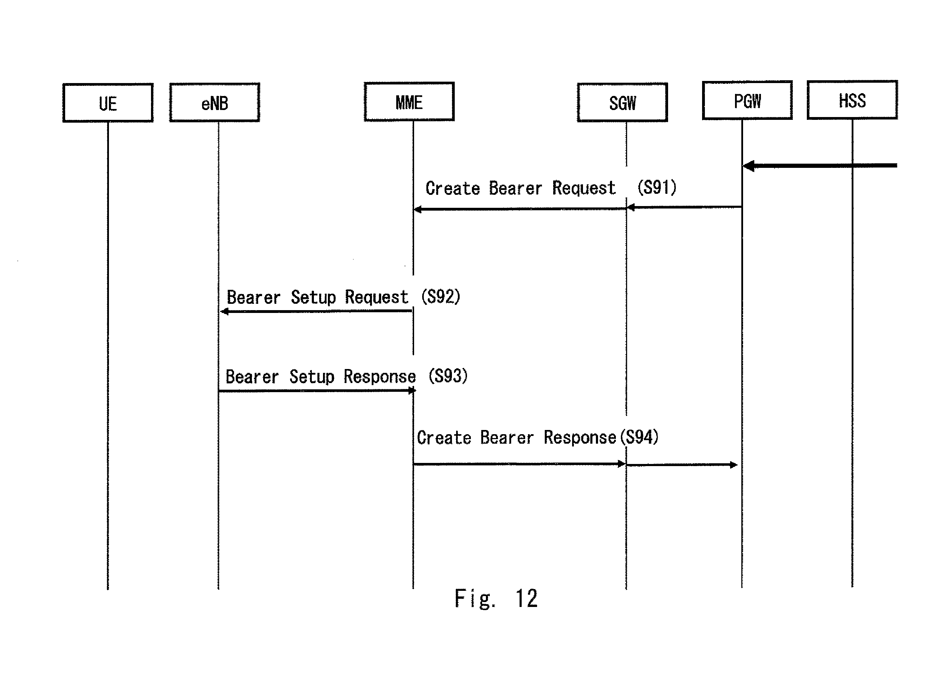

The case of transmitting and receiving a large amount of data that is larger than the data size (or the amount of data) defined as a small amount of data in the environment of transmitting and receiving a small amount of data using GTP-C is described hereinafter with reference to Fig. 12. For example, in the case where a temperature sensor is used as communication equipment that is used for the MTC, the temperature sensor notifies temperature information to a server device or the like at regular time intervals. The temperature information in this case is treated as a small amount of data. On the other hand, when a request for software update of the temperature sensor is made, the temperature sensor transmits data (which is referred to hereinafter as a large amount of data) that is larger than the small amount of data in some cases. A method of transmitting the large amount of data in such a case is described hereinbelow. The large amount of data is data that is larger than the data size defined in pseudo-U/Size attribution.

In the case where the GTP-C bearer is set between the SGW 40 and the PGW 50 in order to transmit a small amount of data, when a large amount of data addressed to the UE 10 arrives at the PGW 50, the PGW 50 newly sets a dedicated bearer for transmitting a large amount of data with the SGW 40. The dedicated bearer may be a GTP-U bearer, for example. To make this setting, the PGW 50 transmits a Create Bearer Request signal to the SGW 40. Further, the SGW 40 transmits the Create Bearer Request signal to the MME 30 (S91). Then, the MME 30 transmits a Bearer Setup Request signal to the eNodeB 20 (S92). The eNodeB 20 then transmits a Bearer Setup Response signal to the MME 30 (S93). The MME 30 then transmits a Create Bearer Response signal to the SGW 40. The SGW 40 then transmits the Create Bearer Response signal to the PGW 50 (S94).

In this manner, by transmitting the Create Bearer Request/Response signal, a dedicated bearer for transmitting a large amount of data is set between the SGW 40 and the PGW 50, and by transmitting the Bearer Setup Request/Response signal, a dedicated bearer is set also between the eNodeB 20 and the SGW 40.

Further, in the case where GTP-C is set between the SGW 40 and the PGW 50 in order to transmit a small amount of data, when a large amount of data arrives at the PGW 50, the PGW 50 may change the pseudo-U bearer that is already set between the SGW 40 and the PGW 50 to a general GTP-U bearer or a dedicated bearer. In this case, an Update Bearer Request/Response signal is used instead of the Create Bearer Request/Response signal in Steps S91 and S94 in Fig. 12. Further, a Bearer Modify Request/Response is used instead of the Bearer Setup Request/Response signal in Steps S92 and S93 in Fig 12.

Further, the Bearer Modify Request/Response signal is transmitted only when Pseudo-U treatment(2) is set between the eNodeB 20 and the SGW 40.

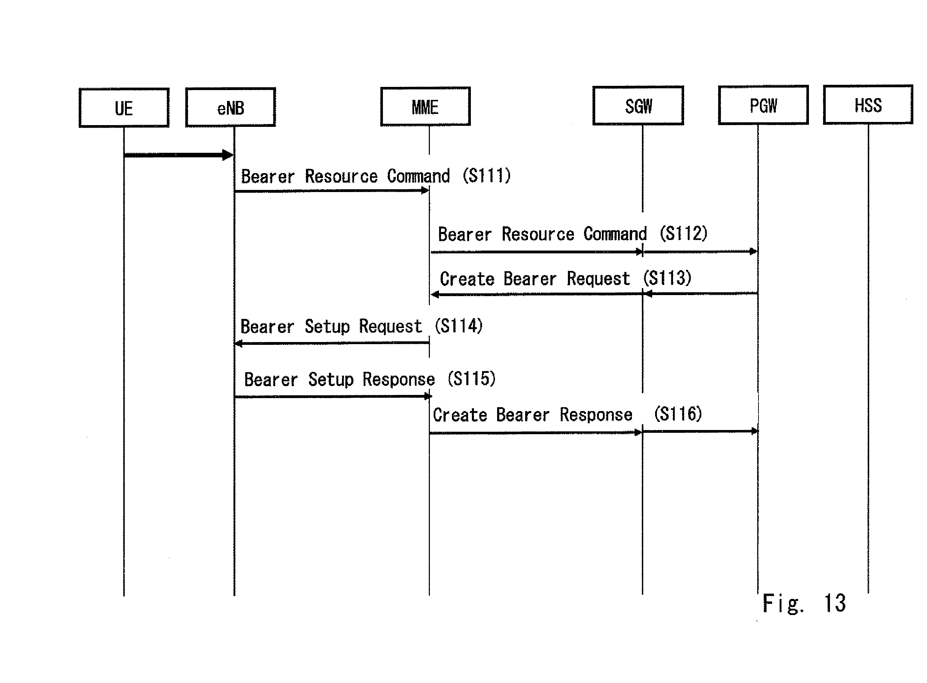

The case of transmitting a large amount of data from the UE 10 in the environment of transmitting and receiving a small amount of data using GTP-C and S1-AP is described hereinafter with reference to Fig. 13.

In the case where S1-AP is set between the eNodeB 20 and the MME 30 and GTP-C is set between the MME 30 and the PGW 50 for transmitting a small amount of data, a dedicated bearer for transmitting a large amount of data is newly set between the eNodeB 20 and the PGW 50 in order to transmit a large amount of data from the UE 10.

First, when the eNodeB 20 receives a large amount of data from the UE 10, the eNodeB 20 transmits a Bearer Resource Command signal to the MME 30 (S111). The MME 30 then transmits the Bearer Resource Command signal to the SGW 40, and further the SGW 40 transmits the Bearer Resource Command signal to the PGW 50 (S112). Then, the PGW 50 transmits a Create Bearer Request signal to the SGW 40, and further the SGW 40 transmits the Create Bearer Request signal to the MME 30 (S113).

Then, the MME 30 transmits a Bearer Setup Request signal to the eNodeB 20 (S114). The eNodeB 20 then transmits a Bearer Setup Response to the MME 30 (S115). The MME 30 then transmits a Create Bearer Response signal to the SGW 40 (S116).

In this manner, by transmitting the Create Bearer Request/Response signal between the MME 30 and the PGW 50, a dedicated bearer for transmitting a large amount of data is set between the SGW 40 and the PGW 50, and by transmitting the Bearer Setup Request/Response signal between the MME 30 and the eNodeB 20, a dedicated bearer is set also between the eNodeB 20 and the SGW 40.

In the case of transmitting a small amount of data using the GTP-C bearer between the SGW 40 and the PGW 50 and transmitting a small amount of data using the GTP-U bearer between the SGW 40 and the eNodeB 20, a large amount of data is transmitted through the GTP-U bearer from the UE 10 to the SGW 40. In such a case, a Bearer Resource Command signal is transmitted from the SGW 40 to the PGW 50. Further, a Create Bearer Request/Response signal is transmitted between the PGW 50 and the MME 30. A dedicated bearer that is used for transmitting a large amount of data is thereby set between the SGW 40 and the PGW 50. Further, in this case, the Bearer Setup Request/Response signal in Fig. 13 is not transmitted.

Further, in the case where GTP-C is set between the SGW 40 and the PGW 50 and between the MME 30 and the SGW 40 for transmitting a small amount of data, and S1 AP is set between the eNodeB 20 and the MME 30, when the eNodeB 20 receives a large amount of data from the UE 10, the pseudo-U bearer that is already set between the eNodeB 20 and the PGW 50 may be changed to a general GTP-U bearer or a dedicated bearer. In this case, a Modify Bearer Request signal is used instead of the Create Bearer Request/Response signal in Steps S113 and S116 in Fig. 13. Further, a Bearer Modify Request/Response signal is used instead of the Bearer Setup Request/Response signal in Steps S114 and S115 in Fig 13.

Further, the Bearer Modify Request/Response signal is transmitted only when Pseudo-U treatment (2) is set between the eNodeB 20 and the SGW 40.

In the case of transmitting a small amount of data using the GTP-C bearer between the SGW 40 and the PGW 50 and transmitting a small amount of data using the GTP-U bearer between the SGW 40 and the eNodeB 20, a large amount of data is transmitted through the GTP-U bearer from the UE 10 to the SGW 40. In such a case, a Bearer Resource Command signal is transmitted from the SGW 40 to the PGW 50. Further, a Modify Bearer Request/Response signal is transmitted between the PGW 50 and the MME 30. The pseudo-U bearer that is already set between the SGW 40 and the PGW 50 can be thereby changed to a dedicated bearer or a GTP-U bearer that is used for transmitting a large amount of data. Further, in this case, the Bearer Modify Request/Response signal in Fig. 13 is not transmitted.

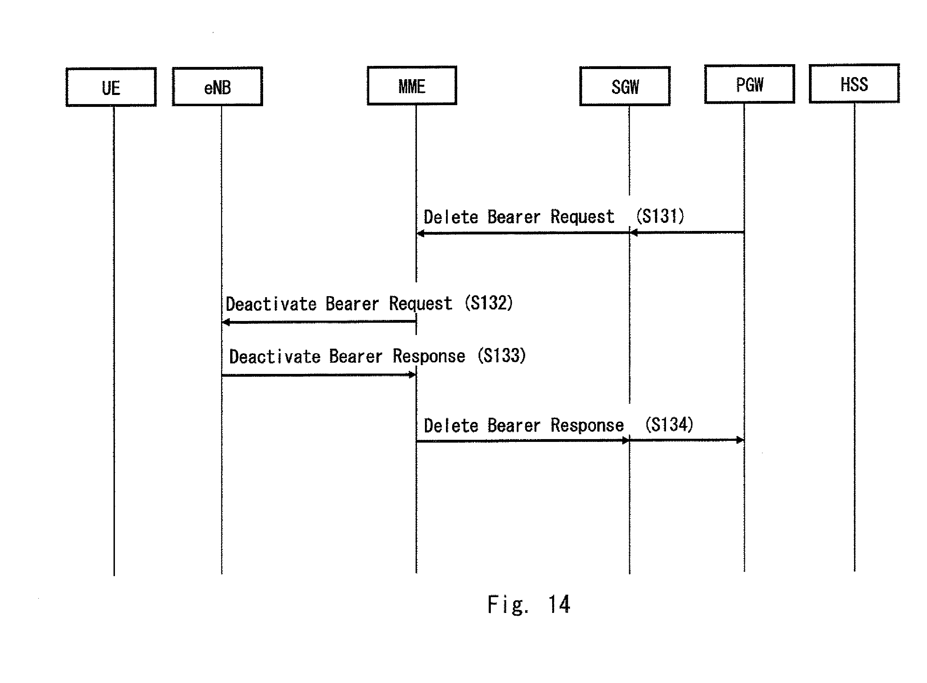

A flow of a process in the case of deleting a dedicated bearer that is set for transmitting a large amount of data is described hereinafter with reference to Fig. 14. The dedicated bearer is deleted when transmission of a large amount of data ends between the eNodeB 20 and the PGW 50. To be specific, the dedicated bearer may be deleted when the fact that a large amount of data is not transmitted for a certain period of time is detected in the eNodeB 20 or the PGW 50.

First, when the PGW 50 detects the fact that a large amount of data is not transmitted for a certain period of time, it transmits a Delete Bearer Request signal to the SGW 40, and further the SGW 40 transmits the Delete Bearer Request signal to the MME 30 (S131). Then, in order to delete the dedicated bearer that is set between the eNodeB 20 and the SGW 40, the MME 30 transmits a Deactivate Bearer Request signal to the eNodeB 20 (S132).

Next, the eNodeB 20 transmits a Deactivate Bearer Response signal to the MME 30 (S133). The MME 30 then transmits a Delete Bearer Response signal to the SGW 40, and further the SGW 40 transmits the Delete Bearer Response signal to the PGW 50 (S134). The dedicated bearer that is set between the eNodeB 20 and the PGW 50 is thereby deleted.

Further, in the case where the pseudo-U bearer has been changed to the GTP-U bearer or the dedicated bearer in order to transmit a large amount of data, a flow of a process of setting the bearer back to the pseudo-U bearer at the end of transmission of a large amount of data is described hereinafter. To be specific, an Update Bearer Request/Response signal is used instead of the Delete Bearer Request/Response signal in Steps S131 and S134 in Fig. 14. Further, a Bearer Modify Request/Response signal is used instead of the Deactivate Bearer Request/Response signal in Steps S132 and S133 in Fig. 14. Using those signals, the process of setting the GTP-U bearer or the dedicated bearer back to the pseudo-U bearer is performed.

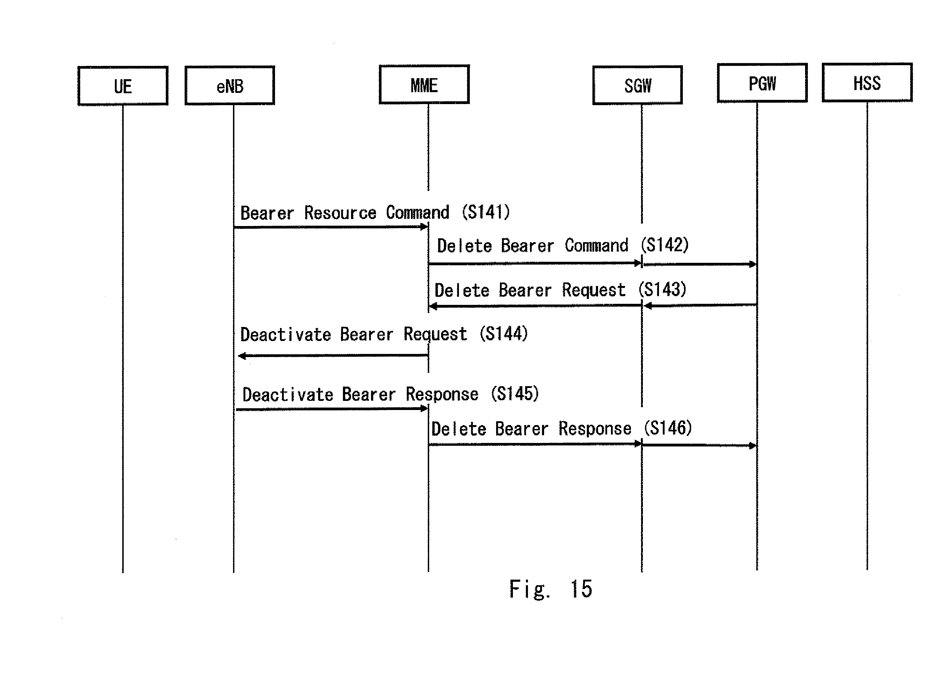

A flow of a process in the case of deleting a dedicated bearer when the eNodeB 20 detects the fact that a large amount of data is not transmitted for a certain period of time is described hereinafter with reference to Fig. 15. First, when the eNodeB 20 detects the fact that transmission of a large amount of data is not performed for a certain period of time, it transmits a Bearer Resource Command signal to the MME 30 (S141).

Then, the MME 30 transmits a Delete Bearer Command signal to the SGW 40, and further the SGW 40 transmits the Delete Bearer Command signal to the PGW 50 (S142). Then, the PGW 50 transmits a Delete Bearer Request signal to the SGW 40, and further the SGW 40 transmits the Delete Bearer Request signal to the MME 30 (S143). Then, the MME 30 transmits a Deactivate Bearer Request signal to the eNodeB 20 (S144). Then, the eNodeB 20 transmits a Deactivate Bearer Response signal to the MME 30 (S145). The MME 30 then transmits a Delete Bearer Response signal to the SGW 40, and further the SGW 40 transmits the Delete Bearer Response signal to the PGW 50 (S146).

In this manner, by transmitting the Delete Bearer Request/Response signal, the dedicated bearer for transmitting a large amount of data between the SGW 40 and the PGW 50 is deleted, and by transmitting the Deactivate Bearer Request/Response signal, the dedicated bearer between the eNodeB 20 and the SGW 40 is deleted.

Further, in the case where the pseudo-U bearer has been changed to the GTP-U bearer or the dedicated bearer in order to transmit a large amount of data, a flow of a process of setting the bearer back to the pseudo-U bearer at the end of transmission of a large amount of data is described hereinafter. To be specific, a Modify Bearer Request/Response signal is used instead of the Delete Bearer Request/Response signal in Steps S143 and S146 in Fig. 15. Further, a Bearer Modify Request/Response signal is used instead of the Deactivate Bearer Request/Response signal in Steps S144 and S145 in Fig. 15. Using those signals, the process of setting the GTP-U bearer or the dedicated bearer back to the pseudo-U bearer is performed.

In the case of transmitting a small amount of data using the GTP-C bearer between the SGW 40 and the PGW 50 and transmitting a small amount of data using the GTP-U bearer between the SGW 40 and the eNodeB 20, the fact that a large amount of data is not transmitted may be detected in the SGW 40. In this case, a Delete Bearer Command signal is transmitted from the SGW 40 to the PGW 50. Further, a Delete Bearer Request/Response signal is transmitted between the PGW 50 and the MME 30. The dedicated bearer that is set between the SGW 40 and the PGW 50 to be used for transmitting a large amount of data is thereby deleted. Further, in this case, the Deactivate Bearer Request/Response in Fig. 15 is not transmitted.

As described above, by using the mobile communication system according to the first exemplary embodiment of the invention, it is possible to set the pseudo-U bearer that does not require reservation of communication resources between the eNodeB 20 and the PGW 50. It is thereby possible to transmit a small amount of data by using communication resources that are used for transmitting a control signal such as GTP-C and S1-AP, in the same process flow as in the case of using the GTP-U bearer for transmission of a small amount of data.

### (Second exemplary embodiment)

An example in which transfer of a control signal and user data between the SGW 40 and the PGW 50 is performed using a transfer method that is specified as PMIP (Proxy Mobile IP) according to a second exemplary embodiment of the invention is described hereinbelow. The control signal between the SGW 40 and the PGW 50 is transmitted and received by using the protocol that is specified in PMIP (which is referred to hereinafter as PMIP). The user data between the SGW 40 and the PGW 50 is transferred as a general IP packet.

In the case where PMIP is used between the SGW 40 and the PGW 50, a PMIP bearer is used instead of the GTP-C bearer between the SGW 40 and the PGW 50 in Fig. 2 for transmission of a small amount of data.

Further, in a PMIP message that is transmitted through PMIP, a PMIP message header is used instead of the GTP-C message header in Fig. 4, and it has IE A to C just like shown in Fig. 4. Further, in the PMIP message, UP-PDU IE is specified to transmit a small amount of data.

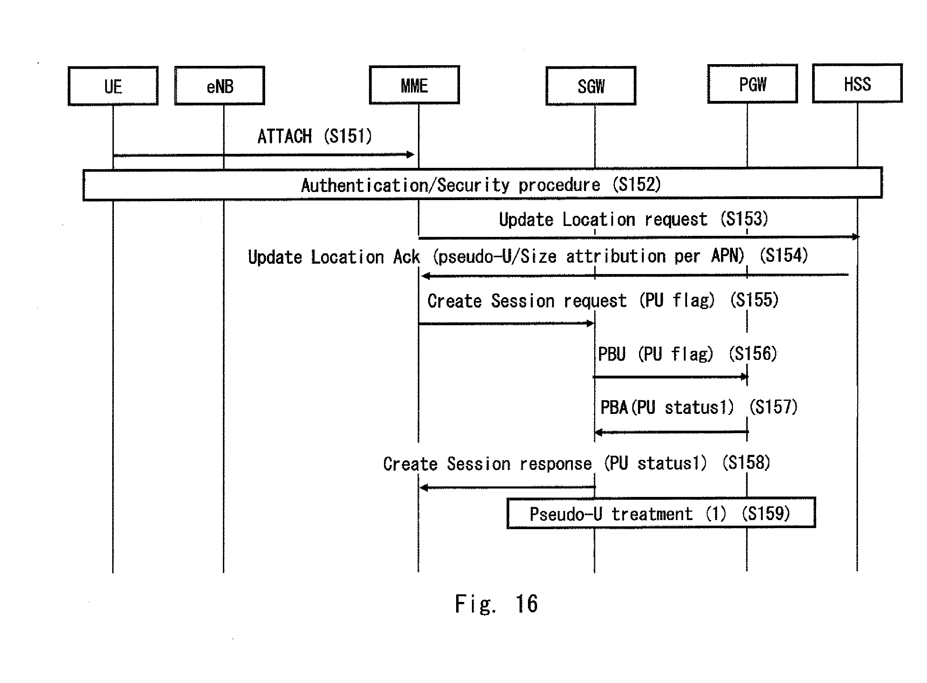

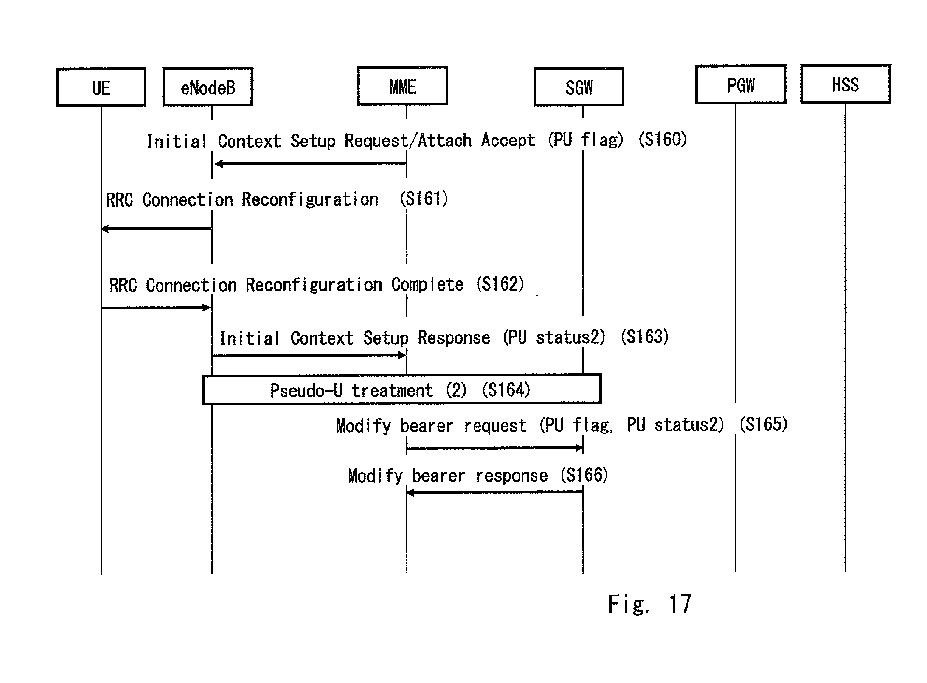

A flow of an ATTACH process of the UE 10 in the case where PMIP is used between the SGW 40 and the PGW 50 is described hereinafter with reference to Figs. 16 and 17. Steps S151 to S154 are the same as Steps S1 to S4 in Fig. 5 and thus not redundantly described in detail. In Step S154, when the MME 30 receives an Update Location Ack signal, it transmits a Create Session request signal containing PU flag to the SGW 40 (S155).

Next, the SGW 40 transmits a PBU (Proxy Binding Update) signal to the PGW 50 (S156). The PBU signal contains PU flag. Then, the PGW 50 transmits a PBA (Proxy Binding Ack) signal (S157). The PBA signal contains PU status 1. Then, the SGW 40 transmits a Create Session response signal to the MME 30 (S158). The Create Session response signal contains PU status 1. Pseudo-U treatment (1) is thereby set between the SGW 40 and the PGW 50 (S159). Steps S160 to S166 in Fig. 17 are the same as Steps S8 to S14 in Fig. 5 and thus not redundantly described in detail.

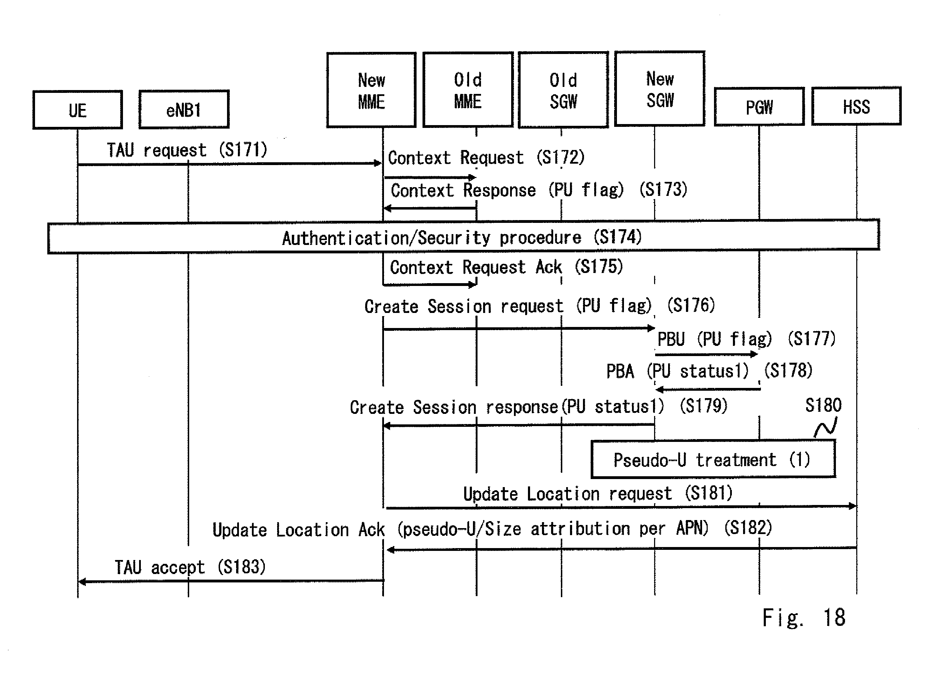

A flow of a process of TAU (Tracking Area Update) in the case where PMIP is used between the SGW 40 and the PGW 50 is described hereinafter with reference to Fig. 18. Steps S171 to S176 are the same as Steps S21 to S26 in Fig. 6 and thus not redundantly described in detail. In Step S 176, the New SGW that has received a Create Session request signal transmits a PBU signal containing PU flag to the PGW 50 (S177). Next, the PGW 50 transmits a PBA signal containing PU status 1 to the New SGW (S178). Steps S179 to S183 are the same as Steps S29 to S33 in Fig. 6 and thus not redundantly described in detail.

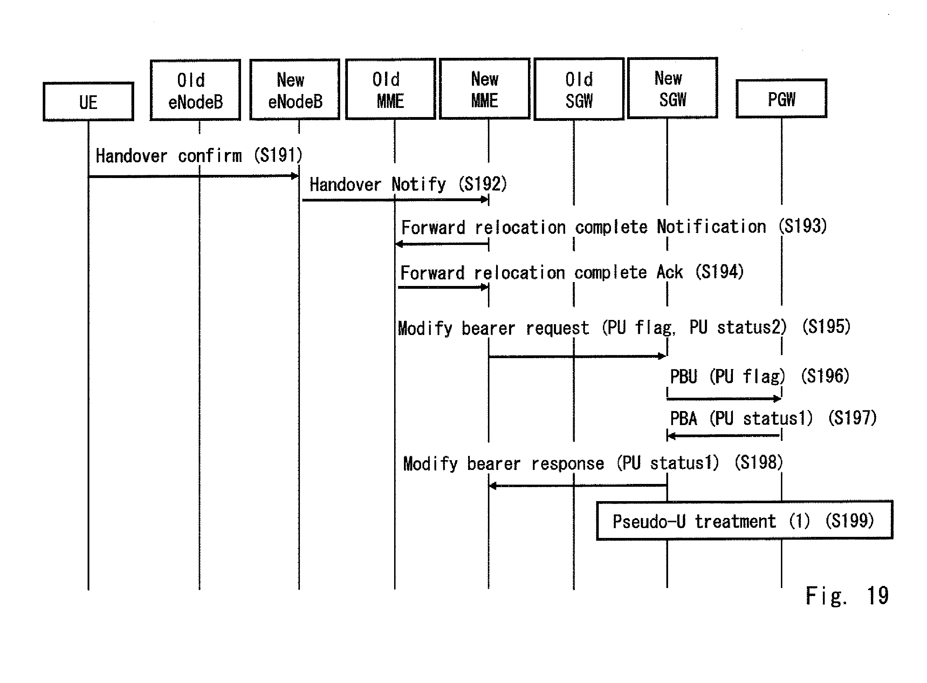

A flow of a handover process after Handover command is transmitted to the UE 10 is described hereinafter with reference to Fig. 19. Steps S191 to S195 are the same as Steps S61 to S65 in Fig. 9 and thus not redundantly described in detail. In Step S195, the New SGW that has received a Modify bearer request signal transmits a PBU signal containing PU flag to the PGW 50 (S196). The PGW 50 then transmits a PBA signal containing PU status 1 to the New SGW (S197). Steps S198 and S199 are the same as Steps S68 and S69 in Fig. 9 and thus not redundantly described in detail.

As described above, by using the mobile communication system according to the second exemplary embodiment of the invention, it is possible to set the pseudo-U bearer that does not require reservation of communication resources between the eNodeB 20 and the PGW 50 also in the case of using the transfer method that is specified as PMIP between the SGW 40 and the PGW 50. It is thereby possible to transmit a small amount of data by using communication resources that are used for transmitting a control signal such as PMIP, in the same process flow as in the case of using the GTP-U bearer for transmission of a small amount of data.

### (Third exemplary embodiment)

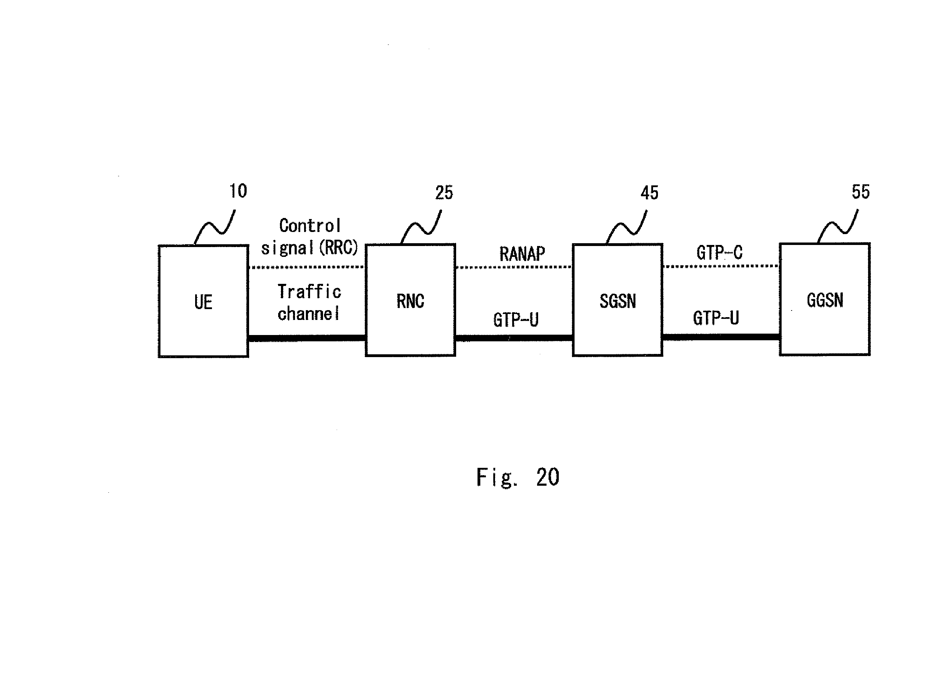

A configuration example of a mobile communication system according to a third exemplary embodiment of the invention is described hereinafter with reference to Fig. 20. The configuration of the mobile communication system shown in Fig. 20 is an example of using GPRS that is specified as the second generation or the third generation specified in the 3GPP for a core network. Devices that constitute GPRS include SGSN 45 and GGSN 55. Further, RNC 25 is used for an access network or RAN (Radio Area Network), and the UE 10 is connected to the RNC 25.

The UE 10 is the same as that in Fig. 1 and not redundantly described in detail. The RNC 25 is a device that integrates base stations and performs communication with a UE (mobile station) through a base station. For example, the RNC 25 specifies the SGSN 45 that is a destination of user data transmitted from the UE 10 and transmits the user data to the specified SGSN 45.

The SGSN 45 is used as a data relay device that transmits and receives user data between the RNC 25 and the GGSN 55. The user data is packet data containing voice data or the like transmitted from the UE 10.

The GGSN 55 is used as a gateway device that transmits and receives user data with an external network. The external network is a different network from a network that has the RNC 25, the SGSN 45 and the GGSN 55. In some cases, the external network is a network that is managed by a mobile operator different from the mobile operator that manages the RNC 25, the SGSN 45 and the GGSN 55, for example.

Protocols that are specified between the respective node devices are described hereinafter with reference to Fig. 20. The control signal between the UE 10 and the RNC 25 is transmitted and received using the protocol defined as RRC. The user data in the UE 10 and the RNC 25 is transmitted and received using Traffic channel.

The user data between the RNC 25 and the SGSN 45 and the user data between the SGSN 45 and the GGSN 55 are transmitted and received using the protocol specified as GTP-U.

The control signal between the RNC 25 and the SGSN 45 is transmitted and received using the protocol specified as RANAP. The control signal between the SGSN 45 and the GGSN 55 is transmitted and received using the protocol specified as GTP-C.

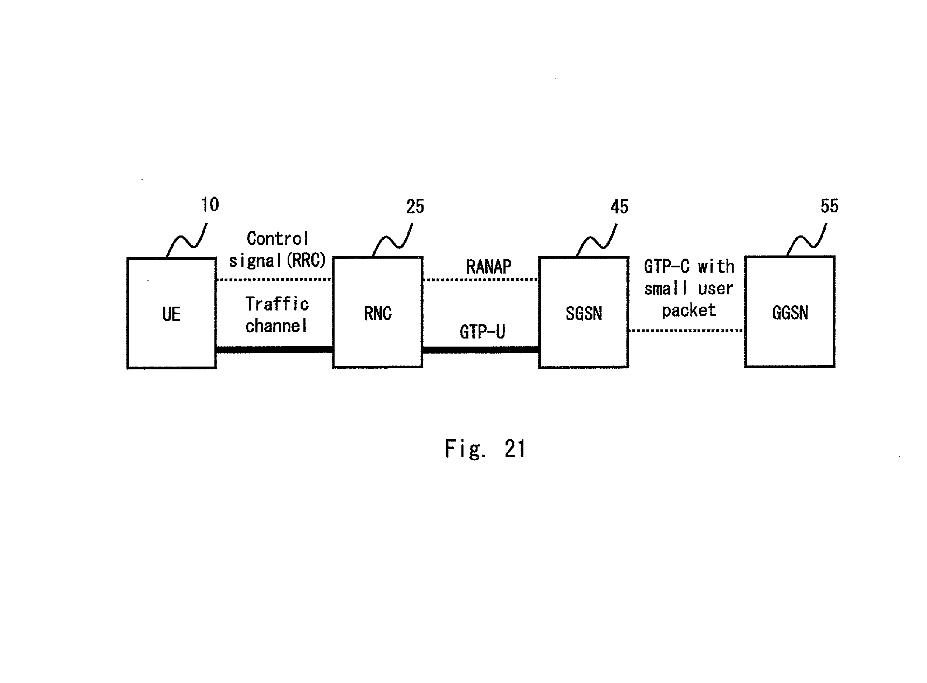

A configuration of transmitting and receiving a small amount of data between the SGSN 45 and the GGSN 55 by using communication resources for transmitting and receiving a control signal is described hereinafter with reference to Fig. 21.

Fig. 21 shows transmitting and receiving a small amount of data between the SGSN 45 and the GGSN 55 by using the protocol specified as GTP-C. For example, the SGSN 45 transmits a small amount of data that is transmitted from the RNC 25 through GTP-U to the GGSN 55 through GTP-C. Alternatively, when the GGSN 55 receives a small amount of data addressed to the UE 10, the GGSN 55 transmits the small amount of data to the SGSN 45 through GTP-C. In this manner, by transmitting and receiving a small amount of data between the SGSN 45 and the GGSN 55 by using GTP-C, it is not necessary to reserve communication resources for user data in the SGSN 45 and the GGSN 55 and thereby reduce resource load.

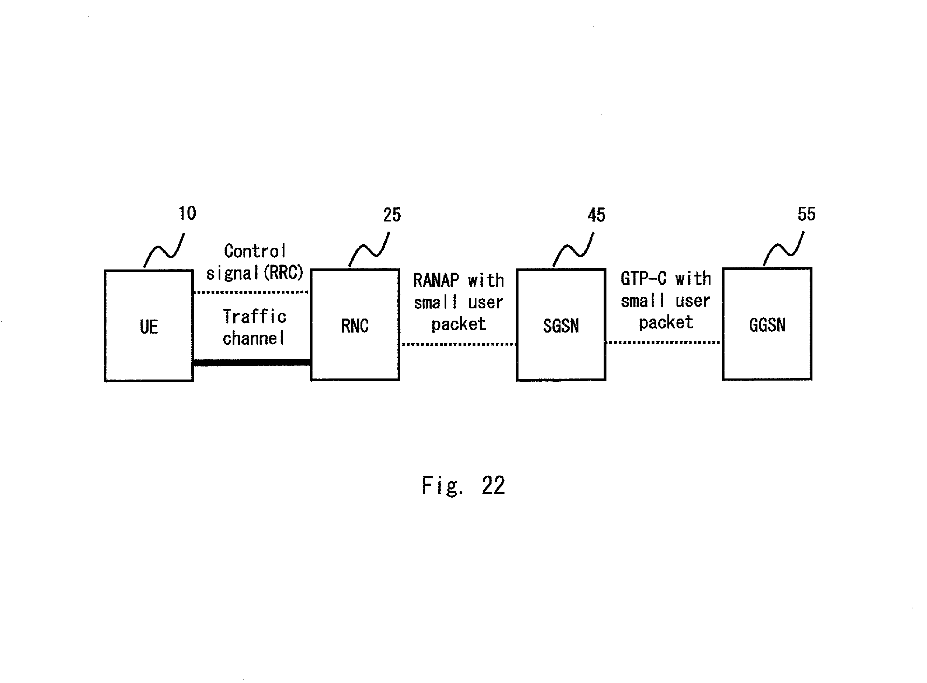

Fig. 22 shows an example of transmitting a small amount of data, which has been transmitted using GTP-U, between the RNC 25 and the SGSN 45 by using the protocol for transmitting and receiving a control signal. The RNC 25 transmits a small amount of data that is transmitted through Traffic channel to the SGSN 45 through RANAP. Alternatively, when the SGSN 45 receives a small amount of data addressed to the UE 10 from the GGSN 55, the SGSN 45 transmits the small amount of data to the RNC 25 through RANAP. Transmitting and receiving between the SGSN 45 and the GGSN 55 are the same as shown in Fig. 21 and not redundantly described in detail.

In this manner, by transmitting and receiving a small amount of data between the RNC 25 to the SGSN 45, in addition to between the SGSN 45 and the GGSN 55, by using RANAP that is used for transmitting a control signal, it is not necessary to reserve communication resources for user data in the RNC 25 and thereby reduce resource load.

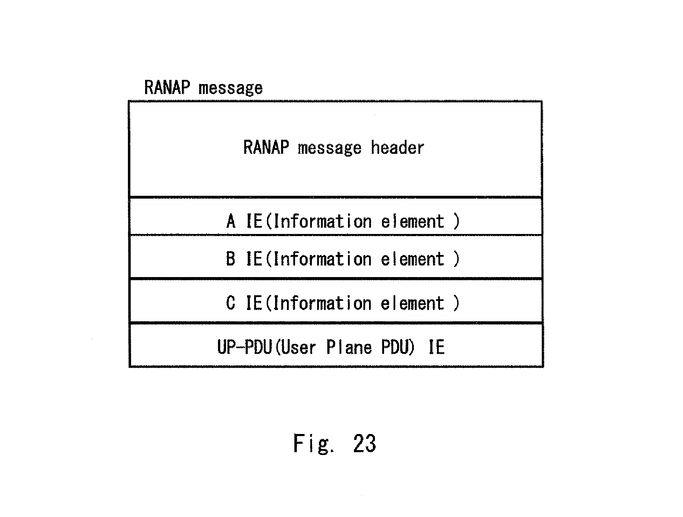

A configuration example of RANAP is described hereinafter with reference to Fig. 23. A RANAP message that is transmitted through RANAP has a RANAP message header and IE A to C. Further, in the RANAP message, UP-PDU IE is specified to transmit a small amount of data.

Further, in the configuration of Fig. 21, the processing operation of the UE 10 and the RNC 25 is the same as that of the UE 10 and the RNC 25 shown in Fig. 20. Therefore, it is not necessary to incorporate a novel feature into the UE 10 and the RNC 25 in order to implement the present invention. On the other hand, in the configuration of Fig. 22, the processing operation of the UE 10 is the same as that of the UE 10 shown in Fig. 20. Therefore, it is not necessary to incorporate a novel feature into the UE 10 in order to implement the present invention.

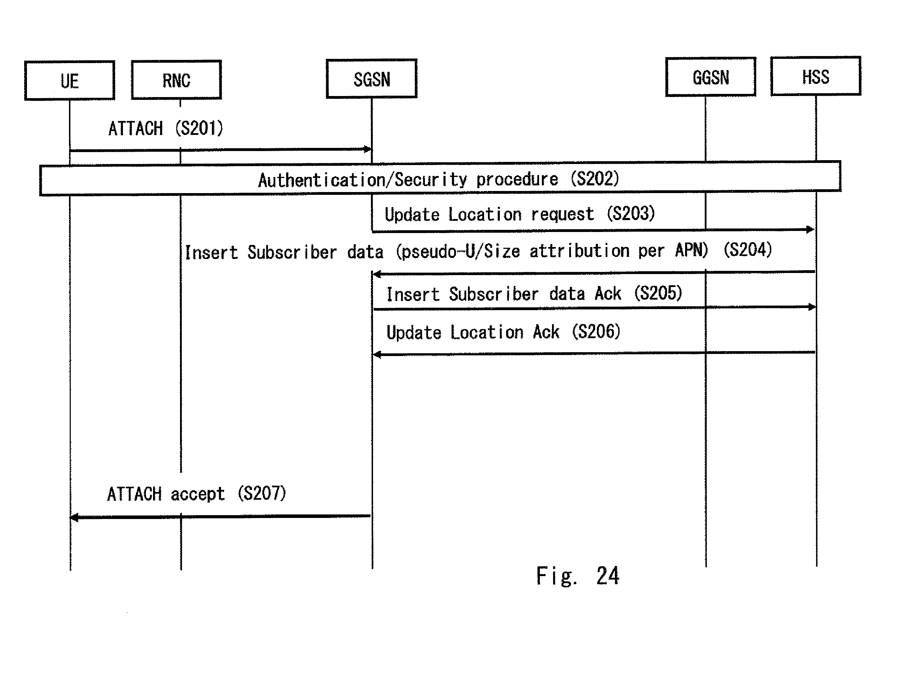

A flow of an ATTACH process in the network according to the second exemplary embodiment of the invention is described hereinafter with reference to Fig. 24. First, the UE 10 transmits an ATTACH signal to the SGSN 45 (S201). Next, authentication and security setting are performed between the UE 10 and HSS (Home Subscriber Server) (S202). Then, the SGSN 45 transmits an Update Location request signal to the HSS (S203). Then, the HSS transmits an Insert subscriber data signal to the SGSN 45 (S204). The Insert subscriber data signal contains pseudo-U/Size attribution that is set per APN. The pseudo-U/Size attribution may be set per IMSI, IMEISV or the like, other than per APN.

Then, the SGSN 45 transmits an Insert subscriber data Ack signal to the HSS (S205). The HSS then transmits an Update Location ACK signal to the SGSN 45. The SGSN 45 thereby acquires and manages pseudo-U attribution information that is set per APN or the like. Then, the SGSN 45 transmits an ATTACH accept signal to the UE 10 (S207).

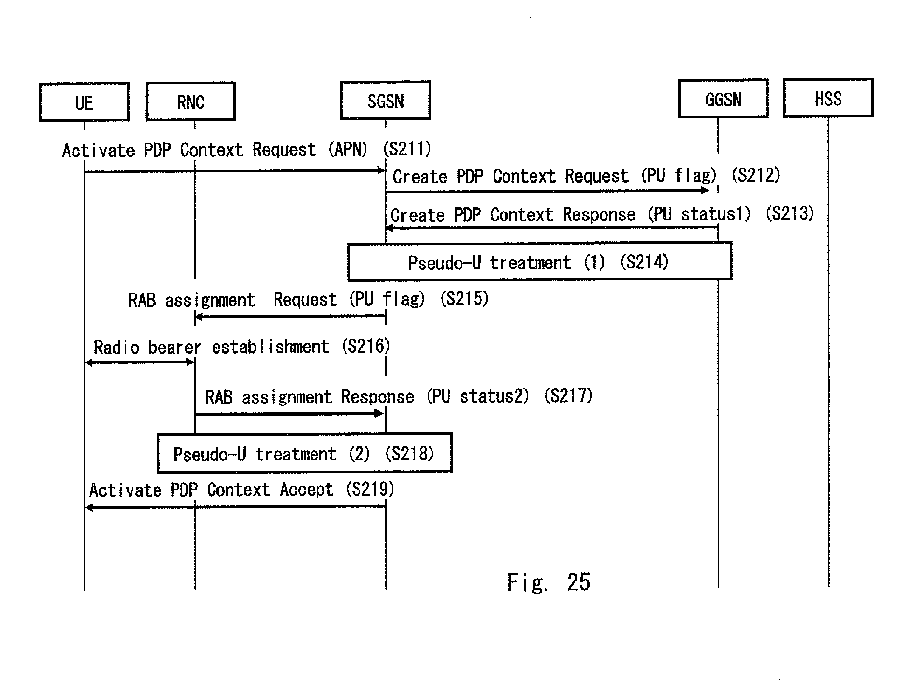

A flow of a PDP Context Activation process is described hereinafter with reference to Fig. 25. PDP Context is communication resources that are used for transmitting user data between the SGSN 45 and the GGSN 55. Further, an example in which a small amount of data is transmitted as user data is described in this figure.

First, the UE 10 transmits an Activate PDP Context Request (APN) signal to the SGSN 45 (S211). The SGSN 45 then transmits a Create PDP Context Request signal containing PU flag to the GGSN 55 (S212). Then, the GGSN 55 transmits a Create PDP Context Response signal containing PU status 1 to the SGSN 45 (S213). In this manner, by sharing PU status 1 between the SGSN 45 and the GGSN 55, Pseudo-U treatment (1) is set between the SGSN 45 and the GGSN 55 (S214).

Next, in order to set a pseudo-U bearer between the RNC 25 and the SGSN 45, the SGSN 45 transmits a RAB assignment Request signal containing PU flag to the RNC 25 (S215). The RNC 25 then sets a Radio bearer with the UE 10 (S216). Then, the RNC 25 transmits a RAB assignment Response signal containing PU status 2 to the SGSN 45 (S217). In this manner, by sharing PU status 2 between the RNC 25 and the SGSN 45, Pseudo-U treatment (2) is set between the RNC 25 and the SGSN 45 (S218). Then, the SGSN 45 transmits an Activate PDP Context Accept signal to the UE 10 (S219).

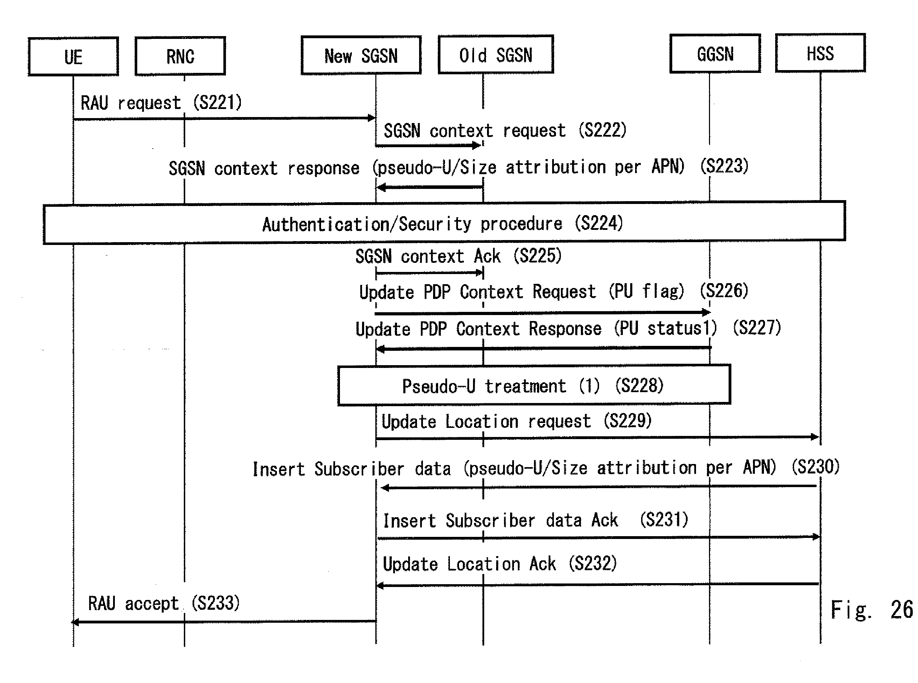

A flow of a RAU (Routing Area Update) process that accompanies change in SGSN is described hereinafter with reference to Fig. 26. Routing Area (RA) is location information of the UE 10 that is managed on a GPRS network. RA may be an area composed of a plurality of cells. RAU is processing that is performed when RA where the UE 10 is located is changed.

First, the UE 10 transmits a RAU signal to the SGSN (which is referred to hereinafter as New SGSN) that manages RA after change (S221). Next, the New SGSN transmits a SGSN Context request signal to the SGSN (which is referred to hereinafter as Old SGSN) that manages RA before change (S222). Then, the Old SGSN transmits a SGSN Context response signal to the New SGSN (S223). The SGSN Context response signal contains pseudo-U/Size attribution that is associated with the UE 10. After that, authentication and security setting are performed between the UE 10 and HSS (Home Subscriber Server) (S224).

Then, the New SGSN transmits a SGSN Context Ack signal to the Old SGSN (S225). The New SGSN then transmits an Update PDP Context Request signal to the GGSN 55 in order to set a pseudo-U bearer with the GGSN 55 (S226). The Update PDP Context Request signal contains PU flag. Then, the GGSN 55 transmits an Update PDP Context Response signal containing PU status 1 to the New SGSN (S227). Pseudo-U treatment (1) is thereby set between the New SGSN and the GGSN 55 (S228).

Steps S229 to S232 are the same as Steps S203 to S206 in Fig. 24 and thus not redundantly described in detail. In Step S232, the New SGSN that has received an Update Location Ack signal transmits a RAU accept signal to the UE 10(S233).

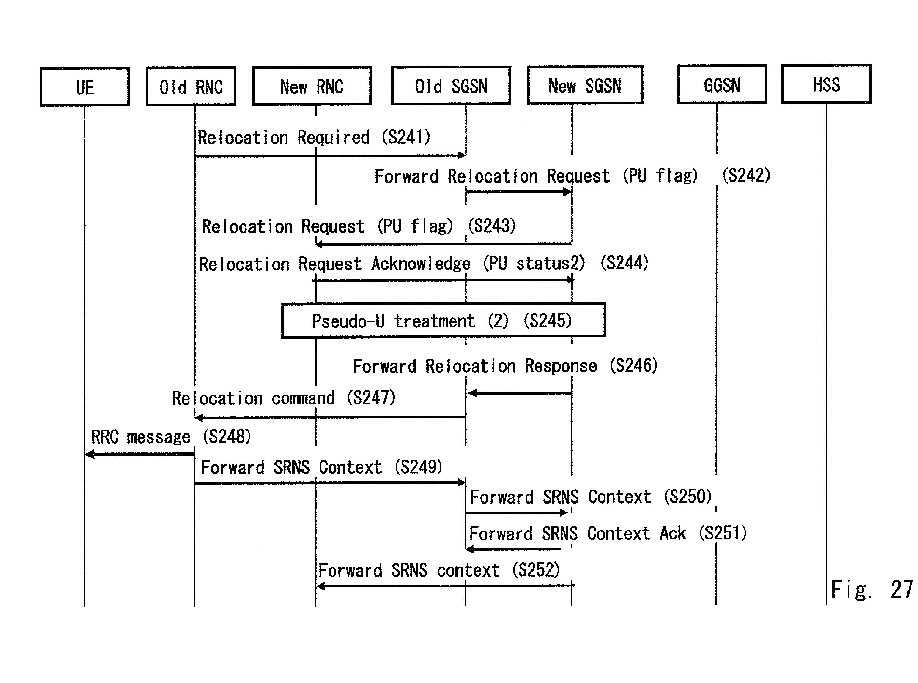

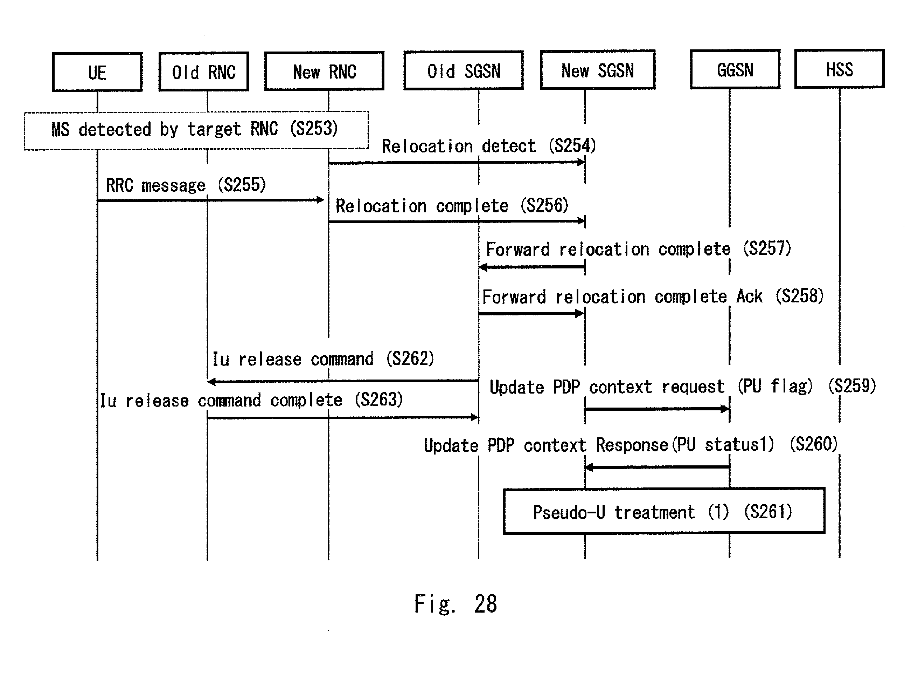

A flow of a process in the case where the RNC and the SGSN to which the UE 10 is connected are changed is described hereinafter with reference to Figs. 27 and 28.

First, the RNC before change (which is referred to hereinafter Old RNC) transmits a Relocation Required signal to the SGSN before change (which is referred to hereinafter Old SGSN) (S241). Next, the Old SGSN transmits a Forward Relocation Request signal containing PU flag to the SGSN after change (which is referred to hereinafter New SGSN) (S242). Then, the New SGSN transmits a Relocation Request signal containing PU flag to the New RNC (S243). Then, the New RNC transmits a Relocation Request Acknowledge signal containing PU status 2 to the New SGSN (S244). Pseudo-U treatment (2) is thereby set between the New RNC and the New SGSN (S245).

Then, the New SGSN transmits a Forward Relocation Response signal to the Old SGSN(S246). The Old SGSN then transmits a Relocation command signal to the Old RNC (S247). The Old RNC then transmits a RRC message signal to the UE 10(S248). Then, the Old RNC transmits a Forward SRNS Context signal to the Old SGSN (S249). The Old SGSN then transmits a Forward SRNS Context signal to the New SGSN (S250). The New SGSN transmits a Forward SRNS Context Ack signal to the Old SGSN (S251) and further transmits a Forward SRNS Context signal to the New RNC (S252).

Referring then to Fig. 28, when the UE 10 is detected by the New RNC (S253), the New RNC transmits a Relocation detect signal to the New SGSN (S254). The UE 10 then transmits a RRC message signal to the New RNC (S255). The New RNC then transmits a Relocation complete signal to the New SGSN (S256). The New SGSN then transmits a Forward relocation complete signal to the Old SGSN (S257). The Old SGSN then transmits a Forward relocation complete Ack signal to the New SGSN (S258). The New SGSN then transmits an Update PDP Context request signal containing PU flag to the GGSN 55 (S259). The GGSN 55 then transmits an Update PDP Context Response signal containing PU status 1 to the New SGSN (S260). Pseudo-U treatment (1) is thereby set between the New SGSN and the GGSN 55 (S261).

Further, in order to release communication resources that are reserved between the Old SGSN and the Old RNC, the Old SGSN transmits an Iu release command signal to the Old RNC (S262). The Old RNC then transmits an Iu release command complete signal to the Old SGSN(S263).

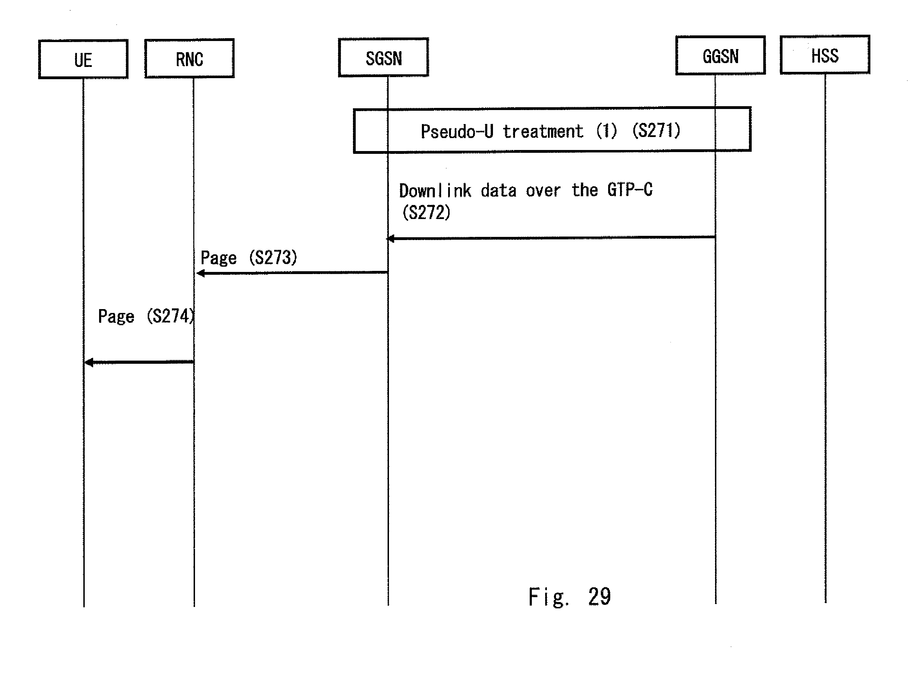

A flow of a process in the case where the GGSN 55 receives a small amount of data addressed to the UE 10 is described hereinafter with reference to Fig. 29.

It is assumed that Pseudo-U treatment (1) is set between the SGSN 45 and the GGSN 55 (S271). When the GGSN 55 receives a small amount of data addressed to the UE 10 that is associated with Pseudo-U treatment (1), it transmits the received small amount of data to the SGSN 45 through GTP-C (S272). Next, the SGSN 45 transmits a Page signal to the RNC 25 (S273), and further the RNC 25 transmits the Page signal to the UE 10 (S274).

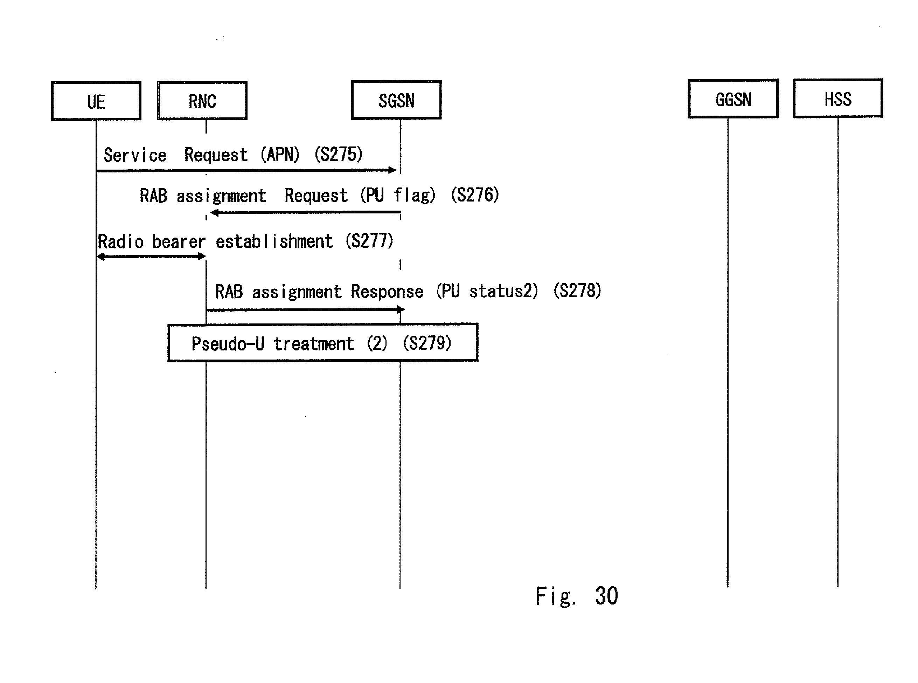

A flow of a process in the case of transmitting a small amount of data from the UE 10 is described hereinafter with reference to Fig. 30. Note that the process shown in Fig. 30 is used also as the process which is executed by the UE 10 that has received the Page signal in Fig. 29.

First, the UE 10 transmits a Service Request signal to the SGSN 45 (S275). Next, the SGSN 45 transmits a RAB assignment Request signal containing PU flag to the RNC 25 (S276). The RAB assignment Request signal may contain a small amount of data. Then, the RNC 25 sets a radio bearer with the UE 10 (S277). The RNC 25 may transmit the small amount of data received with the RAB assignment Request signal to the UE 10 by using the set radio bearer. Then, the RNC 25 transmits a RAB assignment Response signal containing PU status 2 to the SGSN 45 (S278). Pseudo-U treatment (2) is thereby set between the RNC 25 and the SGSN 45 (S279).

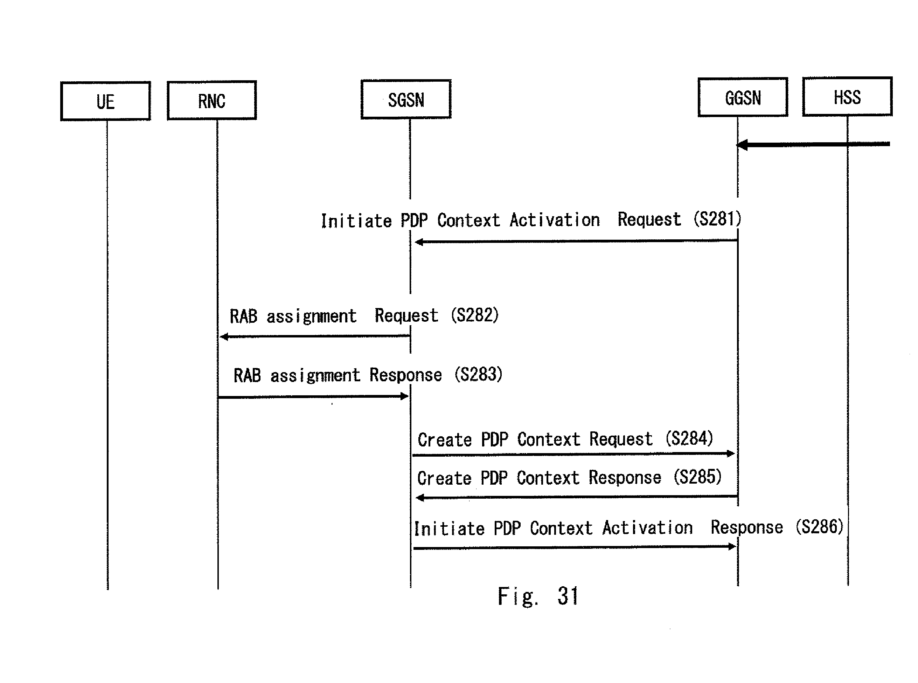

The case of transmitting and receiving a large amount of data addressed to the UE 10 in the environment of transmitting and receiving a small amount of data using GTP-C is described hereinafter with reference to Fig. 31.

In the case where GTP-C is set between the SGSN 45 and the GGSN 55 in order to transmit a small amount of data, when a large amount of data addressed to the UE 10 arrives at the GGSN 55, the GGSN 55 newly sets a dedicated bearer (PDP Context) for transmitting a large amount of data with the SGSN 45. The dedicated bearer may be referred to as Secondary PDP Context if a pseudo bearer is Primary PDP Context. To set the dedicated bearer, the GGSN 55 transmits an Initiate PDP Context Activation Request signal to the SGSN 45 (S281). The SGSN 45 then transmits a RAB assignment Request signal to the RNC 25 (S282). The RNC 25 then transmits a RAB assignment Response signal to the SGSN 45 (S283). The SGSN 45 then transmits a Create PDP context Request signal to the GGSN 55 (S284). The GGSN 55 then transmits a Create PDP context Response signal to the SGSN 45 (S285). The SGSN 45 then transmits an Initiate PDP Context Activation Response signal to the GGSN 55 (S286).

In this manner, by transmitting the Create PDP Context Request/Response signal, a dedicated bearer for transmitting a large amount of data is set between the SGSN 45 and the GGSN 55, and by transmitting the RAB assignment Request/Response signal, a dedicated bearer is set also between the RNC 25 and the SGSN 45. After this process, the GGSN 55 can transmit the received large amount of data to the SGSN 45, and further the SGSN 45 can transmit the received large amount of data to the RNC 25, both by using the dedicated bearer.

Further, in the case where GTP-C is set between the SGSN 45 and the GGSN 55 in order to transmit a small amount of data, when a large amount of data arrives at the GGSN 55, the GGSN 55 may change the pseudo-U bearer that is already set between the SGSN 45 and the GGSN 55 to a general GTP-U bearer or a dedicated bearer. In this case, an Update PDP Context Request/Response signal is used instead of the Initiate PDP Context Activation Request signal in Steps S281 and S286 in Fig. 31. Further, the processing of Steps S284 and S285 in Fig. 31 is omitted in this case.

Further, the RAB assignment Request/Response signal is transmitted only when Pseudo-U treatment(2) is set between the RNC 25 and the SGSN 45.

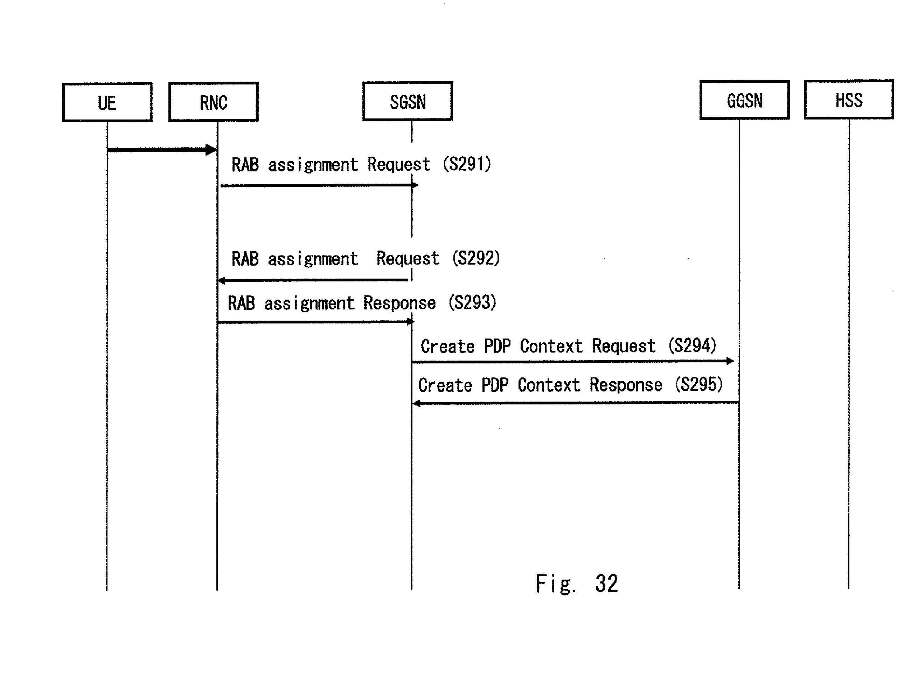

The case of transmitting a large amount of data from the UE 10 in the environment of transmitting and receiving a small amount of data using GTP-C is described hereinafter with reference to Fig. 32. In the case where RANAP is set between the RNC 25 and the SGSN 45 and GTP-C is set between the SGSN 45 and the GGSN 55 for transmitting a small amount of data, a dedicated bearer for transmitting a large amount of data is newly set between the eNodeB 20 and the PGW 50 in order to transmit a large amount of data from the UE 10.

First, when the RNC 25 receives a large amount of data from the UE 10, the RNC 25 transmits a RAB assignment Request signal to the SGSN 45 (S291). The SGSN 45 then transmits the RAB assignment Request signal to the RNC 25 (S292). Then, the RNC 25 transmits a RAB assignment Response signal to the SGSN 45 (S293). The SGSN 45 then transmits a Create PDP Context Request signal to the GGSN 55 (S294). The GGSN 55 then transmits a Create PDP Context Response signal to the SGSN 45 (S295).

In this manner, by transmitting the Create PDP Context Request/Response signal, a dedicated bearer for transmitting a large amount of data is set between the SGSN 45 and the GGSN 55, and by transmitting the RAB assignment Request/Response signal, a dedicated bearer is set also between the RNC 25 and the SGSN 45. After this process, the RNC 25 can transmit the received large amount of data to the SGSN 45, and further the SGSN 45 can transmit the received large amount of data to the GGSN 55, both by using the dedicated bearer.

In the case of transmitting a small amount of data using the GTP-C bearer between the SGSN 45 and the GGSN 55 and transmitting a small amount of data using the GTP-U bearer between the SGSN 45 and the RNC 25, a large amount of data is transmitted through the GTP-U bearer from the UE 10 to the SGSN 45. In such a case, a Create PDP Context Request/Response signal is transmitted between the SGSN 45 and the GGSN 55. A dedicated bearer is thereby set between the SGSN 45 and the GGSN 55. Further, in this case, the RAB assignment Request/Response signal in Fig. 32 is not transmitted.

Further, in the case where RANAP is set between the RNC 25 and the SGSN 45 for transmitting a small amount of data, and GTP-C is set between the SGSN 45 and the GGSN 55 for transmitting a small amount of data, when the RNC 25 receives a large amount of data from the UE 10, the pseudo-U bearer that is already set between the RNC 25 and the GGSN 55 may be changed to a general GTP-U bearer or a dedicated bearer. In this case, a RAB modify Request/Response signal is used instead of the RAB assignment Request signal in Step S291 in Fig. 32. Further, an Update PDP Context Request/Response signal is used instead of the Create PDP Context Request/Response signal in Steps S294 and S295 in Fig 32. The pseudo-U bearer that is already set between the RNC 25 and the GGSN 55 can be thereby changed to a general GTP-U bearer or a dedicated bearer.

In the case of transmitting a small amount of data using the GTP-C bearer between the SGSN 45 and the GGSN 55 and transmitting a small amount of data using the GTP-U bearer between the SGSN 45 and the RNC 25, a large amount of data is transmitted through the GTP-U bearer from the UE 10 to the SGSN 45. In such a case, an Update PDP Context Request/Response signal is transmitted from the SGSN 45 to the GGSN 55. The pseudo-U bearer that is already set between the SGSN 45 and the GGSN 55 can be thereby changed to a dedicated bearer. Further, in this case, the RAB assignment Request/Response signal in Fig. 32 is not transmitted.

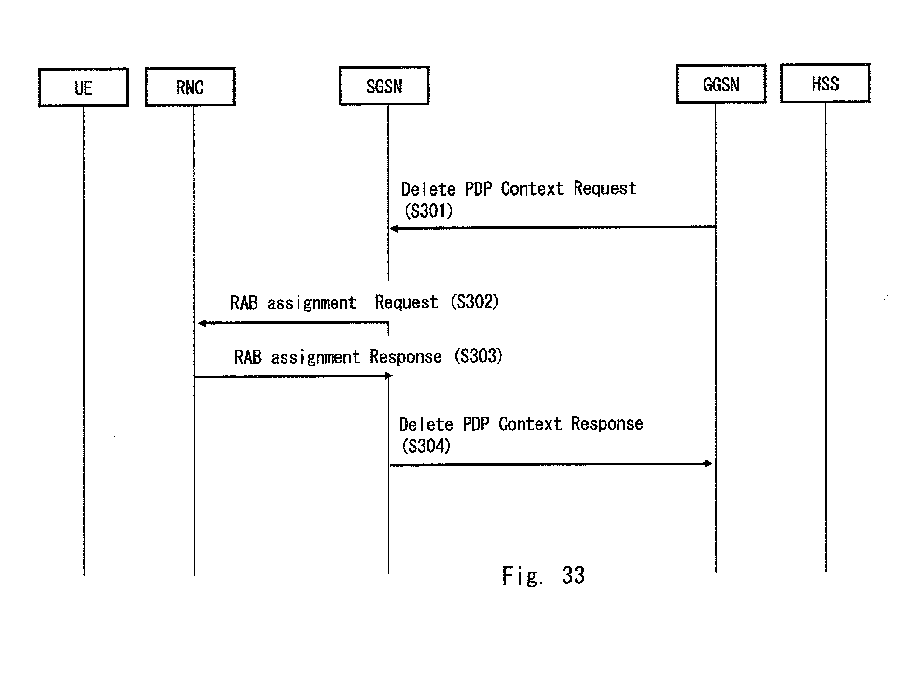

A flow of a process in the case of deleting a dedicated bearer that is set for transmitting a large amount of data is described hereinafter with reference to Fig. 33. The dedicated bearer is deleted when transmission of a large amount of data ends between the RNC 25 and the GGSN 55. To be specific, the dedicated bearer may be deleted when the fact that a large amount of data is not transmitted for a certain period of time is detected in the RNC 25 or the GGSN 55.

First, when the GGSN 55 detects the fact that a large amount of data is not transmitted for a certain period of time, it transmits a Delete PDP Context Request signal to the SGSN 45 (S301). Then, in order to delete the dedicated bearer that is set between the RNC 25 and the SGSN 45, the RNC 25 transmits a RAB assignment Request signal to the RNC 25 (S302).

Next, the RNC 25 transmits a RAB assignment Response signal to the SGSN 45 (S303). The SGSN 45 then transmits a Delete PDP Context Response signal to the GGSN 55 (S304). The dedicated bearer that is set between the RNC 25 and the GGSN 55 is thereby deleted.

Further, in the case where the pseudo-U bearer has been changed to the GTP-U bearer or the dedicated bearer in order to transmit a large amount of data, a flow of a process of setting the GTP-U bearer or the dedicated bearer back to the pseudo-U bearer at the end of transmission of a large amount of data is described hereinafter. To be specific, an Update PDP Context Request/Response signal is used instead of the Delete Bearer Request/Response signal in Steps S301 and S304 in Fig. 33. Using those signals, the process of setting the GTP-U bearer or the dedicated bearer back to the pseudo-U bearer is performed.

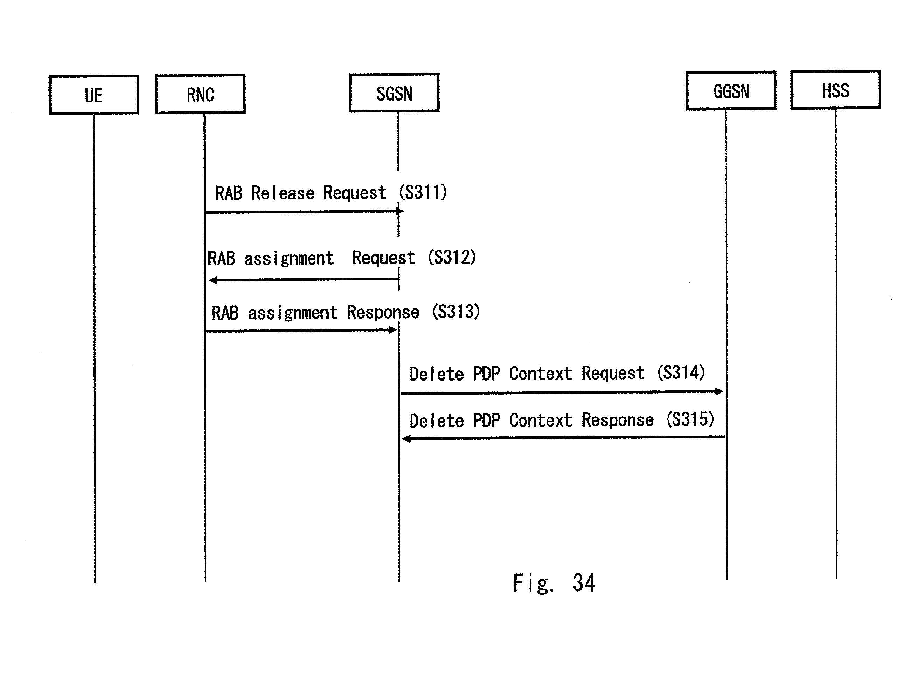

A flow of a process in the case of deleting a dedicated bearer when the RNC 25 detects the fact that a large amount of data is not transmitted is described hereinafter with reference to Fig. 34. First, when the RNC 25 detects the fact that transmission of a large amount of data is not performed for a certain period of time, it transmits a RAB Release Request signal to the SGSN 45 (S311).

Then, the SGSN 45 transmits a RAB assignment Request signal to the RNC 25 (S312). Then, the RNC 25 transmits a RAB assignment Response signal to the SGSN 45 (S313). Then, the SGSN 45 transmits a Delete PDP Context Request signal to the GGSN 55 (S314). Then, the GGSN 55 transmits a Delete PDP Context Response signal to the SGSN 45(S315).

In this manner, by transmitting the Delete PDP Context Request/Response signal, the dedicated bearer for transmitting a large amount of data between the SGSN 45 and the GGSN 55 is deleted, and by transmitting the RAB assignment Request/Response signal, the dedicated bearer between the RNC 25 and the SGSN 45 is deleted.

Further, in the case where the pseudo-U bearer has been changed to the GTP-U bearer or the dedicated bearer in order to transmit a large amount of data, a flow of a process of setting the bearer back to the pseudo-U bearer at the end of transmission of a large amount of data is described hereinafter. To be specific, a RAB modify Request signal is used instead of the RAB Release Request signal in Steps S311 in Fig. 33. Further, an Update PDP Context Request/Response signal is used instead of the Delete PDP Context Request/Response signal in Steps S314 and S315 in Fig. 33. Using those signals, the process of setting the GTP-U bearer or the dedicated bearer back to the pseudo-U bearer is performed.

In the case of transmitting a small amount of data using the GTP-C bearer between the SGSN 45 and the GGSN 55 and transmitting a small amount of data using the GTP-U bearer between the SGSN 45 and the RNC 25, the fact that a large amount of data is not transmitted may be detected in the SGSN 45. In this case, a Delete PDP Context Request/Response signal is transmitted between the SGSN 45 and the GGSN 55, and thereby the dedicated bearer that is set between the SGSN 45 and the GGSN 55 can be deleted. Further, in this case, the RAB Release Request signal and the RAB assignment Request/Response signal in Fig. 34 are not transmitted.

Further, in the case where the pseudo-U bearer has been changed to the GTP-U bearer or the dedicated bearer in order to transmit a large amount of data, a flow of a process of setting the bearer back to the pseudo-U bearer at the end of transmission of a large amount of data is described hereinafter. The process in the case where the end of transmission of a large amount of data is detected in the SGSN 45 is described hereinafter. In this case, by transmitting an Update PDP Context Request/Response signal between the SGSN 45 and the GGSN 55, the process of setting the GTP-U bearer or the dedicated bearer back to the pseudo-U bearer is performed.

As described above, by using the mobile communication system according to the third exemplary embodiment of the invention, it is possible to set the pseudo-U bearer that does not require reservation of communication resources between the RNC 25 and the GGSN 55. It is thereby possible to transmit a small amount of data by using communication resources that are used for transmitting a control signal such as GTP-C and RANAP, in the same process flow as in the case of using the GTP-U bearer for transmission of a small amount of data.

### (Fourth exemplary embodiment)

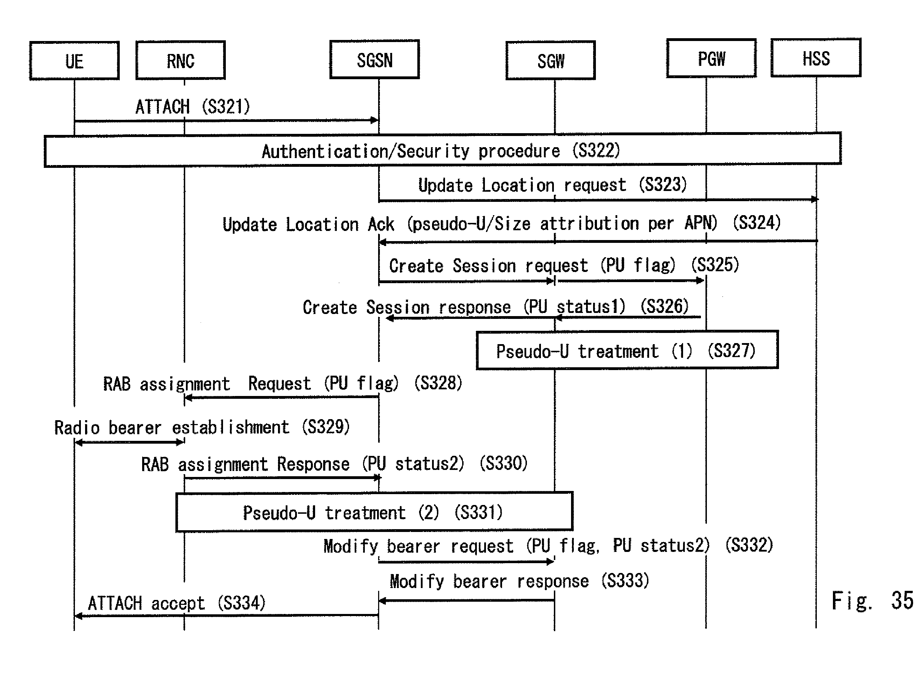

A flow of an ATTCH process according to a fourth exemplary embodiment of the invention is desribed hereinafter with reference to Fig. 35. The network described in the fourth exemplary embodiment has RNC 25 that is used as 3G access in an access network and has SGW 40 and PGW 50 that are used as EPC in a core network. Further, SGSN 45 is placed between the access network and the core network. The UE 10 that transmits and receives a small amount of data is connected to the RNC 25. Such a network configuration is assumed in the following description as well.

Steps S321 to S327 in Fig. 35 are the same as Steps S1 to S7 in Fig. 5 and thus not redundantly described in detail. Note that, however, the SGSN 45 is used in Fig. 35 instead of the MME 30 in Fig. 5. Further, Steps S328 to S331 in Fig. 35 are the same as Steps S215 to S218 in Fig. 25 and thus not redundantly described in detail. When Pseudo-U treatment (2) is set in Step S331, the SGSN 45 transmits a Modify bearer request signal to the SGW 40 (S332). The Modify bearer request signal contains PU flag and PU status 2. Then, the SGW 40 transmits a Modify bearer response signal to the SGSN 45 (S333). The SGSN 45 then transmits an ATTACH accept signal to the UE 10 (S334).

Note that Pseudo-U treatment (2) in Fig. 35 may be set between the RNC 25, the SGSN 45 and the SGW 40, or may be set between the RNC 25 and the SGSN 45 without through the SGSN 45. This is the same in the following description as well.

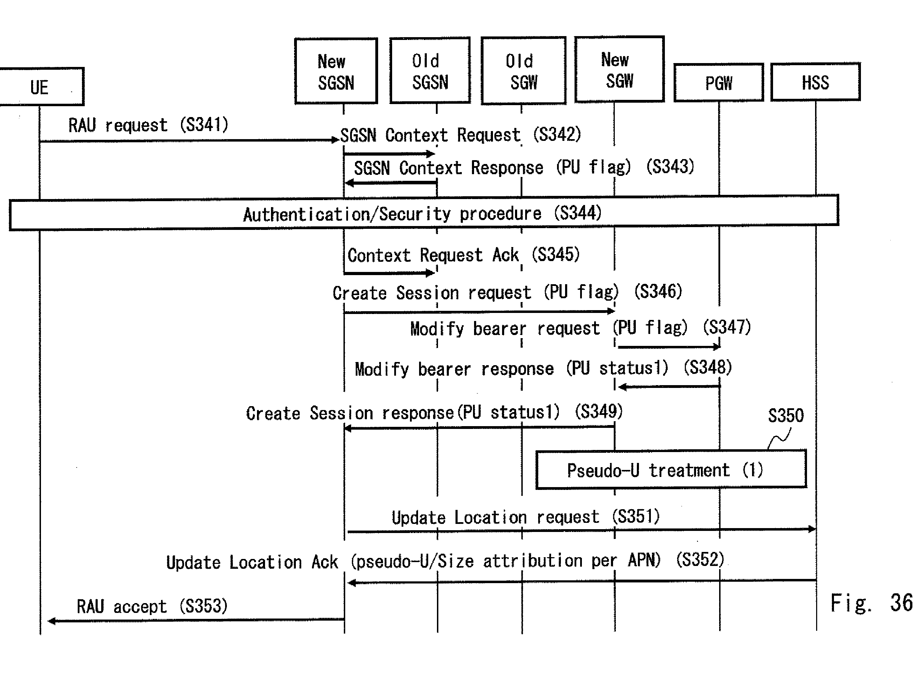

A flow of a RAU (Routing Area Update) process that accompanies change in SGSN and SGW is described hereinafter with reference to Fig. 36. Steps S341 to S345 are the same as Steps S221 to S225 in Fig. 26 and thus not redundantly described in detail. Further, Steps S346 to S352 are the same as Steps S26 to S32 in Fig. 6 and thus not redundantly described in detail. Note that, however, the SGSN is used in Fig. 36 instead of the MME in Fig. 6. In Step S352, the New SGSN that has received an Update Location Ack signal transmits a RAU accept signal to the UE 10 (S353).

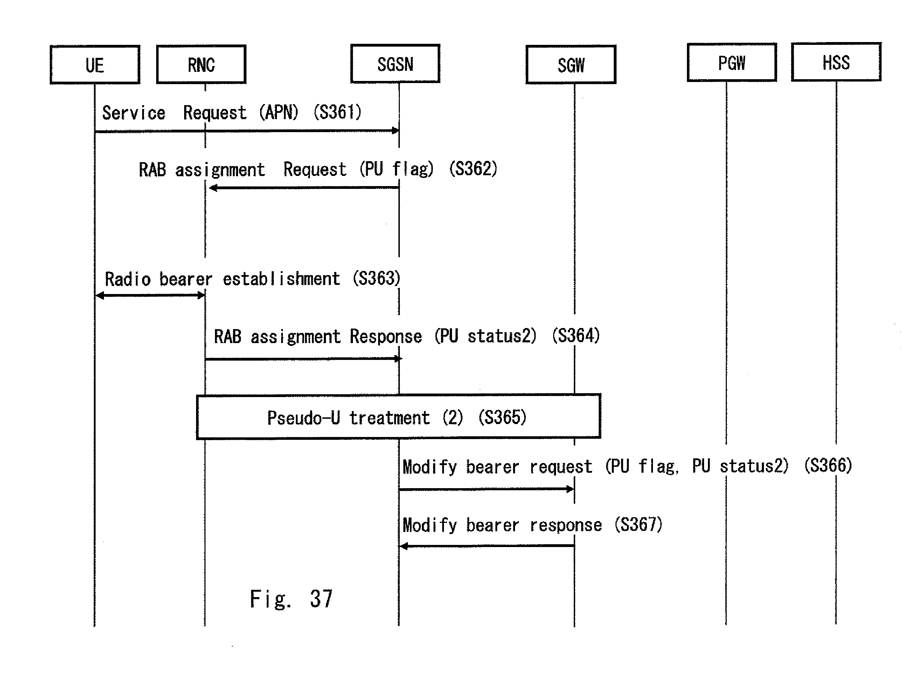

A flow of a process in the case of transmitting a small amount of data from the UE 10 is described hereinafter with reference to Fig. 37. Steps S361 to S365 in Fig. 37 are the same as Steps S275 to S279 in Fig. 30 and thus not redundantly described in detail. Further, Steps S366 and S367 in Fig. 37 are the same as Steps S332 and S333 in Fig. 35 and thus not redundantly described in detail.

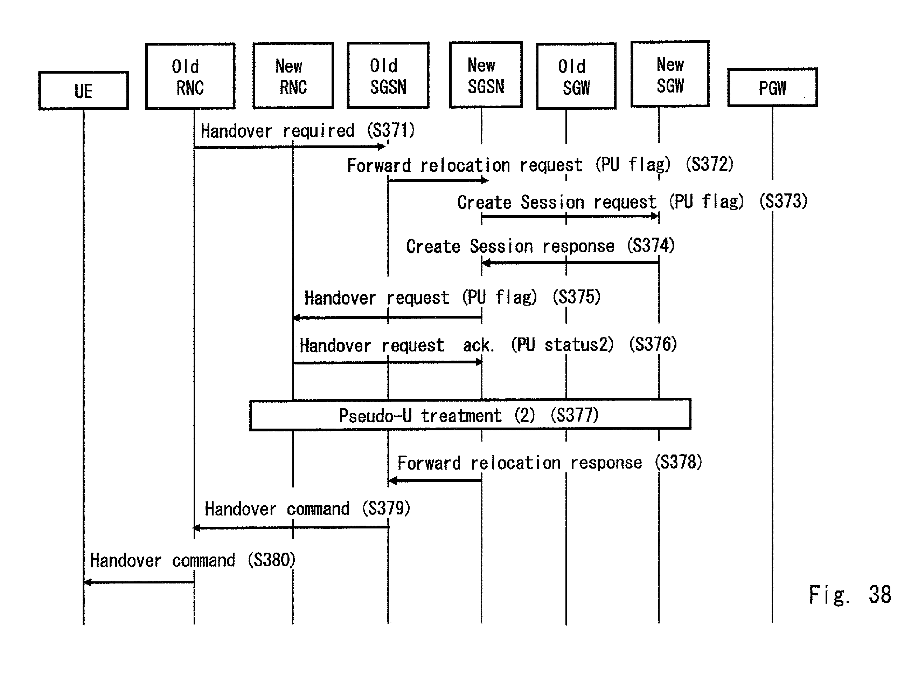

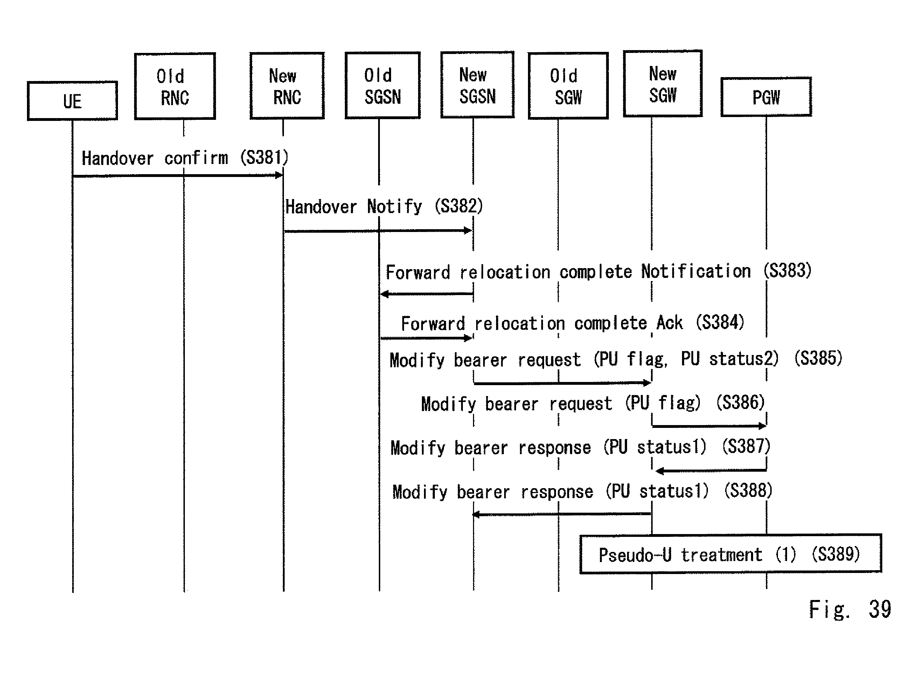

A flow of a handover process is described hereinafter with reference to Figs. 38 and 39. In Figs. 38 and 39, Old RNC and New RNC are used instead of the Old eNB and the New eNB in Figs. 8 and 9, and further Old SGSN and New SGSN are used instead of the Old MME and the New MME in Figs. 8 and 9. Further, Steps S371 to S389 in Figs. 38 and 39 are the same as Steps S51 to S69 in Figs. 8 and 9 and thus not redundantly described in detail.

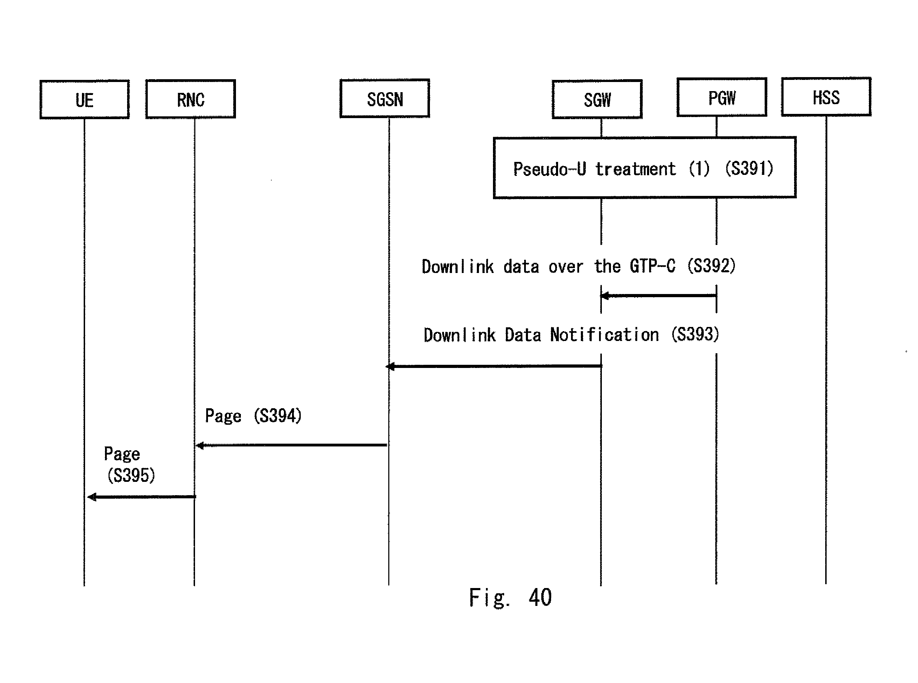

A flow of a process in the case where the PGW 50 receives a small amount of data addressed to the UE 10 is described hereinafter with reference to Fig. 40. In Fig. 40, SGSN is used instead of the MME in Fig. 10, and RNC is used instead of the eNB in Fig. 10. Steps S391 to S395 in Fig. 40 are the same as Steps S71 to S75 in Fig. 10 and thus not redundantly described in detail.

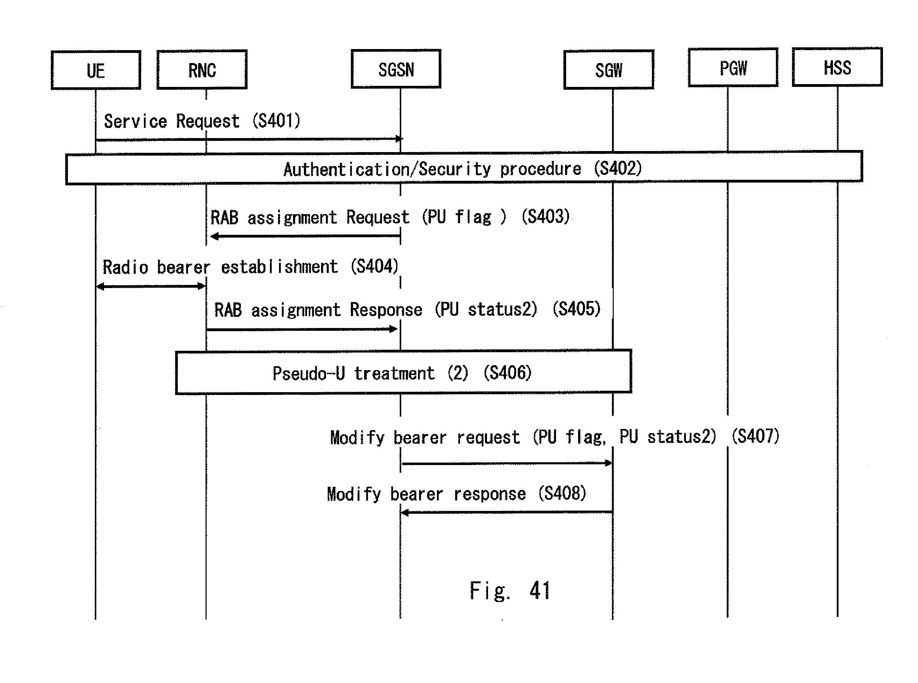

A flow of a process in the case of transmitting a small amount of data from the UE 10 is described hereinafter with reference to Fig. 41. Note that the process shown in Fig. 41 is used also as the process which is executed by the UE 10 that has received the Page signal in Fig. 40.

First, the UE 10 transmits a Service Request signal to the SGSN 45 (S401). Next, authentication and security setting of the UE 10 are performed between the UE 10 and HSS (Home Subscriber Server) (S402). Then, the SGSN 45 transmits a RAB assignment Request signal containing PU flag to the RNC 25 (S403). The RNC 25 then sets a radio bearer with the UE 10 (S404). Then, the RNC 25 transmits a RAB assignment Response signal containing PU status 2 to the SGSN 45 (S405). Pseudo-U treatment (2) is thereby set between the RNC 25 and the SGW40(S406).

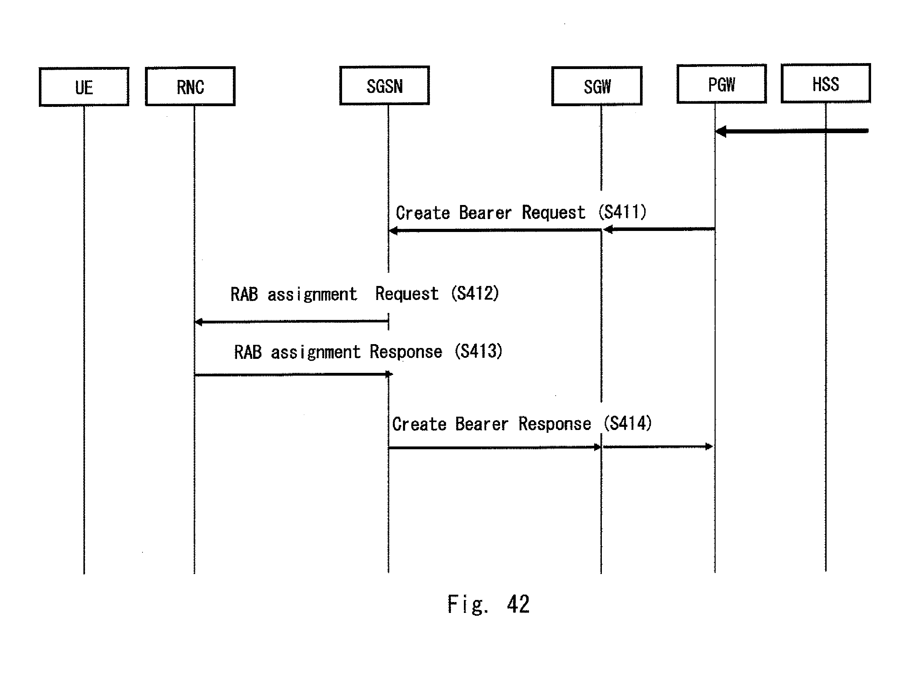

The case of transmitting and receiving a large amount of data addressed to the UE 10 in the environment of transmitting and receiving a small amount of data using GTP-C is described hereinafter with reference to Fig. 42.

In the case where GTP-C is set between the SGW 40 and the PGW 50 in order to transmit a small amount of data, when a large amount of data arrives at the PGW 50, the PGW 50 newly sets a dedicated bearer for transmitting a large amount of data with the SGW 40. For this setting, the PGW 50 transmits a Create Bearer Request signal to the SGW 40. Further, the SGW 40 transmits the Create Bearer Request to the SGSN 45 (S411). The SGSN 45 then transmits a RAB assignment Request signal to the RNC 25 (S412). The RNC 25 then transmits a RAB assignment Response signal to the SGSN 45 (S413). The SGSN 45 then transmits a Create Bearer Response signal to the SGW 40. Further, the SGW 40 transmits the Create Bearer Response signal to the PGW 50 (S414).

In this manner, by transmitting and receiving the Create Bearer Request/Response signal, a dedicated bearer for transmitting a large amount of data is set between the SGW 40 and the PGW 50, and by transmitting and receiving the RAB assignment Request/Response signal, a dedicated bearer is set also between the RNC 25 and the SGSN 45 and between the SGSN 45 and the SGW 40. Alternatively, a dedicated bearer may be set between the RNC 25 and the SGW 40. After this process, the PGW 50 can transmit the received large amount of data to the SGW 40, and further the SGW 40 can transmit the received large amount of data to the RNC 25, or to the RNC 25 through the SGSN 45, by using the dedicated bearer.

Further, in the case where GTP-C is set between the SGW 40 and the PGW 50 in order to transmit a small amount of data, when a large amount of data arrives at the PGW 50, the PGW 50 may change the pseudo-U bearer that is already set to a general GTP-U bearer or a dedicated bearer. In this case, an Update Bearer Request/Response signal is used instead of the Create Bearer Request/Response signal in Steps S411 and S414 in Fig. 42.

Further, the RAB assignment Request/Response signal in Steps S412 and S413 in Fig. 42 is transmitted only when Pseudo-U treatment (2) is set between the RNC 25 and the SGSN 45.

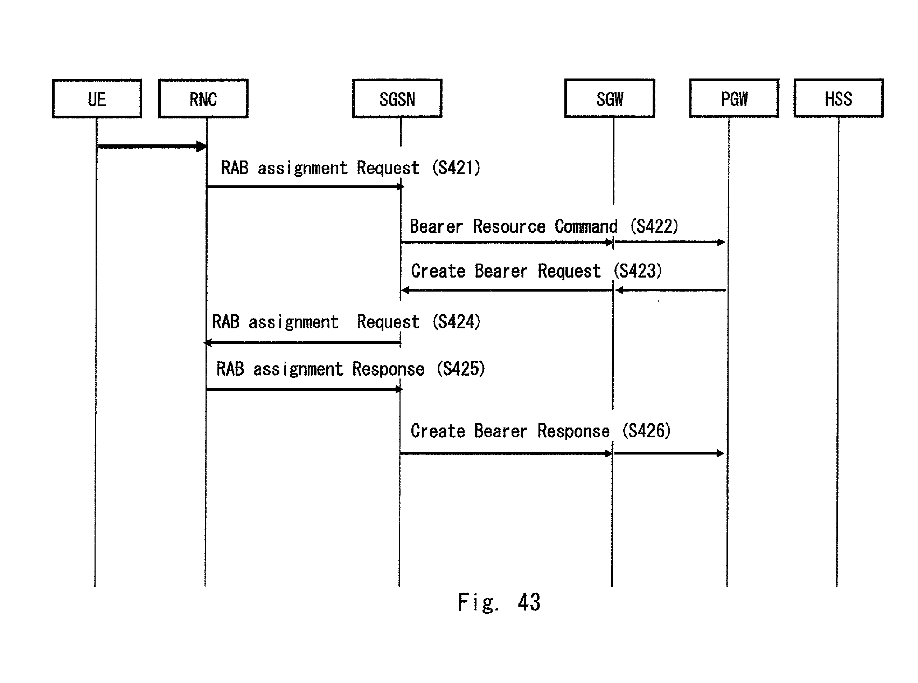

The case of transmitting a large amount of data from the UE 10 in the environment of transmitting and receiving a small amount of data using GTP-C or RANAP is described hereinafter with reference to Fig. 43.

In the case where RANAP is set between the RNC 25 and the SGSN 45 and GTP-C is set between the SGSN 45 and the PGW 50 for transmitting a small amount of data, a dedicated bearer for transmitting a large amount of data is newly set between the RNC 25 and the PGW 50 in order to transmit a large amount of data from the UE 10.

First, when the RNC 25 receives a large amount of data from the UE 10, the RNC 25 transmits a RAB assignment Request signal to the SGSN 45 (S421). The SGSN 45 then transmits a Bearer Resource Command signal to the SGW 40, and further the SGW 40 transnits the Bearer Resource Command signal to the PGW 50 (S422). Then, the PGW 50 transmits a Create Bearer Request signal to the SGW 40, and further the SGW 40 transmits the Create Bearer Request signal to the SGSN 45 (S423).

Then, the SGSN 45 transmits a RAB assignment Request signal to the RNC 25 (S424). The RNC 25 then transmits a RAB assignment Response signal to the SGSN 45 (S425). Then, the SGSN 45 transmits a Create Bearer Response signal to the SGW 40, and further the SGW 40 transmits the Create Bearer Response signal to the PGW 50 (S426).

In this manner, by transmitting the Create Bearer Request/Response signal, a dedicated bearer for transmitting a large amount of data is set between the SGW 40 and the PGW 50, and by transmitting the Bearer Setup Request/Response signal, a dedicated bearer is set also between the RNC 25 and the SGSN 45 and between the SGSN 45 and the SGW 40. Alternatively, by transmitting the Bearer Setup Request/Response signal, a dedicated bearer may be set between the RNC 25 and the SGW 40. After this process, the RNC 25 can transmit the received large amount of data to the SGW 40, or to the SGW 40 through the SGSN 45, and further the SGW 40 can transmit it to the PGW 50, by using the dedicated bearer.

In the case of transmitting a small amount of data using the GTP-C bearer between the SGSN 45 and the PGW 50 and transmitting a small amount of data using the GTP-U bearer between the SGSN 45 and the RNC 25, a large amount of data is transmitted through the GTP-U bearer from the UE 10 to the SGSN 45. In such a case, a Bearer Resource Command signal is transmitted from the SGSN 45 to the PGW 50. Further, a Create Bearer Request/Response signal is transmitted between the PGW 50 and the SGSN 45. A dedicated bearer is thereby set between the SGSN 45 and the PGW 50. Further, in this case, the RAB assignment Request/Response signal in Fig. 43 is not transmitted.

Further, in the case where GTP-C and RANAP are set between the RNC 25 and the PGW 50 for transmitting a small amount of data, when the RNC 25 receives a large amount of data from the UE 10, the pseudo-U bearer that is already set between the RNC 25 and the PGW 50 may be changed to a general GTP-U bearer or a dedicated bearer. In this case, a Modify Bearer Request/Response signal is used instead of the Create Bearer Request/Response signal in Steps S423 and S426 in Fig. 43.

In the case of transmitting a small amount of data using the GTP-C bearer between the SGW 40 and the PGW 50 and transmitting a small amount of data using the GTP-U bearer between the SGW 40 and the eNodeB 20, a large amount of data is transmitted through the GTP-U bearer from the UE 10 to the SGW 40. In such a case, the pseudo-U bearer that is already set between the SGW 40 and the PGW 50 may be changed to a general GTP-U or dedicated bearer. In this case, a Bearer Resource Command signal is transmitted from the SGW 40 to the PGW 50. Further, a Modify Bearer Request/Response signal is transmitted between the PGW 50 and the MME 30. Further, in this case, a RAB assignment Request/Response signal in Fig. 43 is not transmitted.

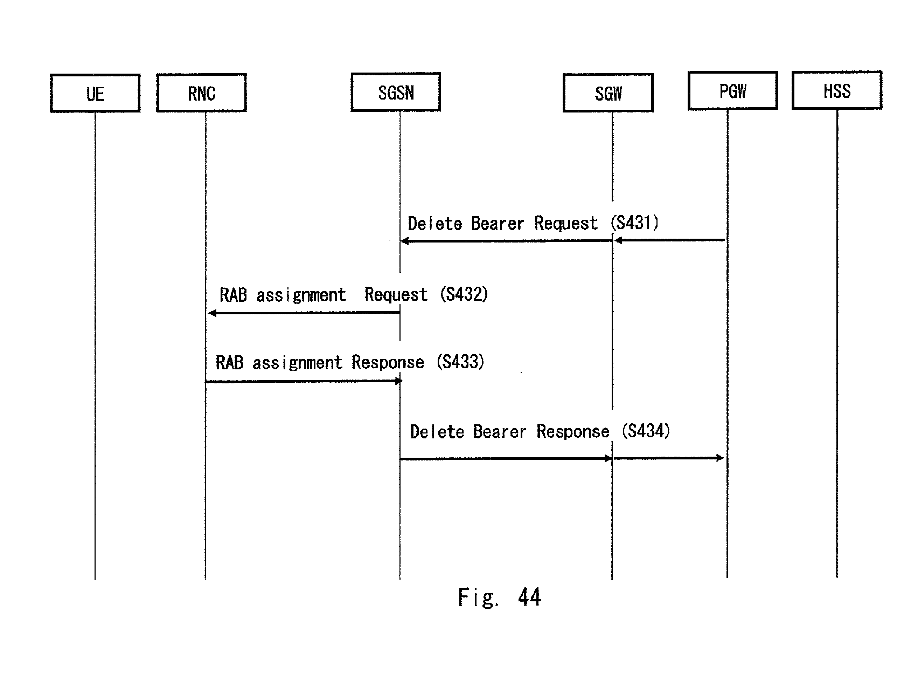

A flow of a process in the case of deleting a dedicated bearer that is set for transmitting a large amount of data is described hereinafter with reference to Fig. 44. The dedicated bearer is deleted when transmission of a large amount of data ends between the RNC 25 and the PGW 50. To be specific, the dedicated bearer may be deleted when the fact that a large amount of data is not transmitted for a certain period of time is detected in the RNC 25 or the PGW 50.

First, when the PGW 50 detects the fact that a large amount of data is not transmitted for a certain period of time, it transmits a Delete Bearer Request signal to the SGW 40, and further the SGW 40 transmits the Delete Bearer Request signal to the SGSN 45 (S431). Then, in order to delete the dedicated bearer that is set between the RNC 25, the SGSN 45 and the SGW 40 or between the RNC 25 and the SGW 40, the SGSN 45 transmits a RAB assignment Request signal to the RNC 25 (S432).

Next, the RNC 25 transmits a RAB assignment Response signal to the SGSN 45 (S433). The SGSN 45 then transmits a Delete Bearer Response signal to the SGW 40, and further the SGW 40 transmits the Delete Bearer Response signal to the PGW 50 (S434). The dedicated bearer that is set between the RNC 25 and the PGW 50 is thereby deleted.

Further, in the case where the pseudo-U bearer has been changed to the GTP-U bearer or the dedicated bearer in order to transmit a large amount of data, a flow of a process of setting the GTP-U bearer or the dedicated bearer back to the pseudo-U bearer at the end of transmission of a large amount of data is described hereinafter. To be specific, an Update Bearer Request/Response signal is used instead of the Delete Bearer Request/Response signal in Steps S431 and S434 in Fig. 44. In this manner, the process of setting the GTP-U bearer or the dedicated bearer back to the pseudo-U bearer is performed.

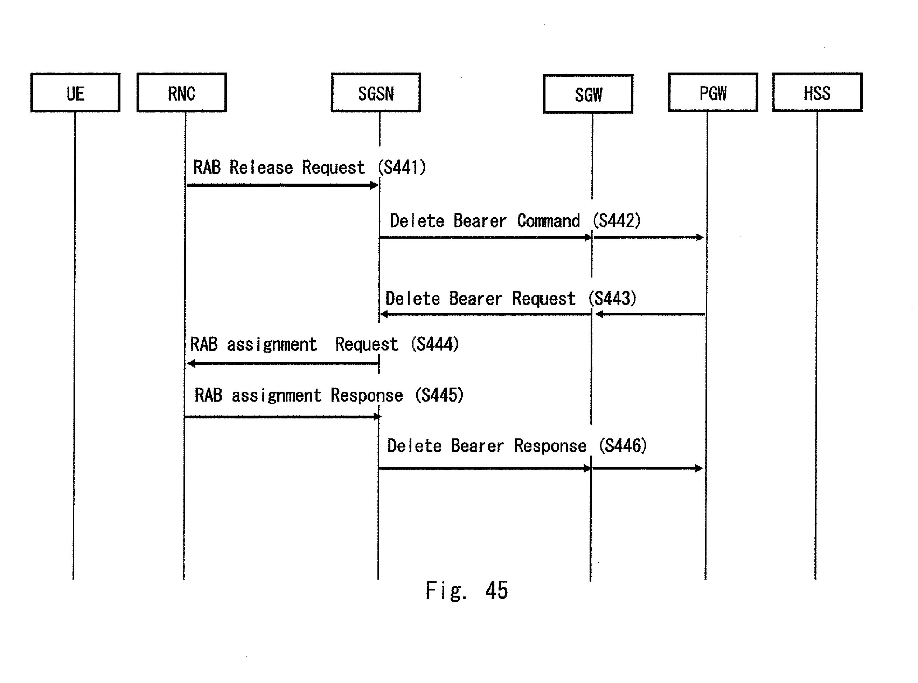

A flow of a process in the case of deleting a dedicated bearer when the RNC 25 detects the fact that a large amount of data is not transmitted is described hereinafter with reference to Fig. 45. First, when the RNC 25 detects the fact that transmission of a large amount of data is not performed for a certain period of time, it transmits a RAB Release Request signal to the SGSN 45 (S441).

Then, the SGSN 45 transmits a Delete Bearer Command signal to the SGW 40, and further the SGW 40 transmits the Delete Bearer Command signal to the PGW 50 (S442). Then, the PGW 50 transmits a Delete Bearer Request signal to the SGW 40, and further the SGW 40 transmits the Delete Bearer Request signal to the SGSN 45 (S443). Then, the SGSN 45 transmits a RAB assignment Request signal to the RNC 25 (S444). The RNC 25 then transmits a RAB assignment Response signal to the SGSN 45 (S445). The SGSN 45 then transmits a Delete Bearer Response signal to the SGW 40, and further the SGW 40 transmits the Delete Bearer Response signal to the PGW 50 (S446).

In this manner, by transmitting the Delete Bearer Request/Response signal, the dedicated bearer for transmitting a large amount of data between the SGW 40 and the PGW 50 is deleted, and by transmitting the Deactivate Bearer Request/Response signal, the dedicated bearer between the RNC 25, the SGSN 45 and the SGW 40 or between the RNC 25 and the SGW 40 is deleted.

Further, in the case where the pseudo-U bearer has been changed to the GTP-U bearer or the dedicated bearer in order to transmit a large amount of data, a flow of a process of setting the bearer back to the pseudo-U bearer at the end of transmission of a large amount of data is described hereinafter. To be specific, a Modify Bearer Request/Response signal is used instead of the Delete Bearer Request/Response signal in Steps S443 and S446 in Fig. 45. Using those signals, the process of setting the GTP-U bearer or the dedicated bearer back to the pseudo-U bearer is performed.

In the case of transmitting a small amount of data using the GTP-C bearer between the SGSN 45 and the PGW 50 and transmitting a small amount of data using the GTP-U bearer between the SGSN 45 and the RNC 25, the fact that a large amount of data is not transmitted may be detected in the SGSN 45. In this case, a Delete Bearer Command signal is transmitted from the SGSN 45 to the PGW 50 in order to delete the dedicated bearer. Further, a Delete Bearer Request/Response signal is transmitted between the PGW 50 and the SGSN 45. Further, in this case, the Deactivate Bearer Request/Response signal in Fig. 45 is not transmitted.

Further, in the case where the pseudo-U bearer has been changed to the GTP-U bearer or the dedicated bearer in order to transmit a large amount of data, a flow of a process of setting the bearer back to the pseudo-U bearer at the end of transmission of a large amount of data is described hereinafter. The process in the case where the end of transmission of a large amount of data is detected in the SGSN 45 is described hereinafter. In this case, by transmitting a Modify Bearer Request/Response signal between the SGSN 45 and the GGSN 55, the process of setting the GTP-U bearer or the dedicated bearer back to the pseudo-U bearer is performed.

As described above, by using the mobile communication system according to the fourth exemplary embodiment of the invention, it is possible to set the pseudo-U bearer that does not require reservation of communication resources between the RNC 25 and the PGW 50. It is thereby possible to transmit a small amount of data by using communication resources that are used for transmitting a control signal such as GTP-C, S1-AP or RANAP, in the same process flow as in the case of using the GTP-U bearer for transmission of a small amount of data.

It should be noted that the present invention is not limited to the above-described exemplary embodiment and may be varied in many ways within the scope of the present invention.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

This application is based upon and claims the benefit of priority from Japanese patent application No. 2012-200731, filed on September 12, 2012, the disclosure of which is incorporated herein in its entirety by reference.

### Reference Signs List

- 10: UE
- 20: eNodeB
- 25: RNC
- 30: MME
- 40: SGW
- 45: SGSN
- 50: PGW
- 55: GGSN

## Claims

1. A mobile communication system comprising:
a first gateway device that transmits user data with a base station; and
a second gateway device that transmits the user data with the first gateway device and an external network, wherein
the first gateway device and the second gateway device transmit a small amount of data autonomously transmitted from a terminal device through the base station by using a communication resource for transmitting a control signal, not a communication resource for transmitting user data, between the first gateway device and the second gateway device.

2. The mobile communication system according to Claim 1, wherein
the terminal device is a machine type.

3. The mobile communication system according to Claim 1 or 2, wherein
the first gateway device determines whether data transmitted from the terminal device is the small amount of data or not, and when the data is determined to be the small amount of data, the first gateway device transmits the data transmitted from the terminal device to the second gateway device by using the communication resource for transmitting the control signal.

4. The mobile communication system according to any one of Claims 1 to 3, wherein
when the data transmitted from the terminal device is determined not to be the small amount of data, the first gateway device sets a communication resource to be used for transmitting the user data between the first gateway device and the second gateway device.

5. The mobile communication system according to any one of Claims 1 to 4, wherein
the second gateway device determines whether data addressed to the terminal device is the small amount of data or not, and when the data is determined to be the small amount of data, the second gateway device transmits the data addressed to the terminal device to the first gateway device by using the communication resource for transmitting the control signal.

6. The mobile communication system according to any one of Claims 1 to 5, wherein
when the data addressed to the terminal device is determined not to be the small amount of data, the second gateway device sets a communication resource to be used for transmitting the user data between the first gateway device and the second gateway device.

7. The mobile communication system according to any one of Claims 1 to 6, wherein
the first gateway device and the second gateway device acquire information as to whether the terminal device transmits the small amount of data from a service control device that manages subscriber data.

8. The mobile communication system according to any one of Claims 1 to 7, wherein
when an instruction to reserve a communication resource for transmitting the user data is given from a call control device that performs call control in the mobile communication system upon execution of a location registration process of the terminal device, the first gateway device and the second gateway device perform a process of reserving a pseudo communication resource for transmitting the user data that does not actually reserve a communication resource.

9. The mobile communication system according to Claim 8, wherein
when the data transmitted from the terminal device is determined not to be the small amount of data, the first gateway device changes the reserved pseudo communication resource for transmitting the user data to a general communication resource to be used for transmitting the data transmitted from the terminal device.

10. The mobile communication system according to Claim 8, wherein
when the data addressed to the terminal device is determined not to be the small amount of data, the second gateway device changes the reserved pseudo communication resource for transmitting the user data to a general communication resource to be used for transmitting the data transmitted from the terminal device.

11. The mobile communication system according to Claim 1, wherein
the base station and the first gateway device further transmit the small amount of data transmitted from the terminal device by using the communication resource for transmitting and receiving the control signal between the base station and the first gateway device.

12. The mobile communication system according to any one of Claims 1 to 11, wherein
the first gateway device is SGW (Serving Gateway) specified in 3GPP, and the second gateway device is PGW (Packet Data Network Gateway) specified in 3GPP.

13. The mobile communication system according to any one of Claims 1 to 11, wherein
the first gateway device is SGSN (Serving GPRS Support Node) specified in 3GPP, and the second gateway device is GGSN (Gateway GPRS Support Node) specified in 3GPP.

14. A data communication method between a first gateway device that transmits user data with a base station and a second gateway device that transmits the user data with an external network, comprising:
transmitting a small amount of data autonomously transmitted from a terminal device through the base station by using a communication resource for transmitting a control signal, not a communication resource for transmitting user data, between the first gateway device and the second gateway device.

15. A gateway device that transmits user data with a base station and an external network, wherein
the gateway device transmits a small amount of data autonomously transmitted from a terminal device through the base station by using a communication resource for transmitting a control signal, not a communication resource for transmitting user data.

16. A base station that transmits user data with a terminal device and a gateway device, wherein
the base station transmits a small amount of data autonomously transmitted from the terminal device by using a communication resource for transmitting a control signal, not a communication resource for transmitting user data.
